# EUROPEAN PATENT APPLICATION

(11) **EP 4 737 088 A1**
(43) Date of publication of application: **06.05.2026**
(21) Application number: 25212572.9
(22) Date of filing: 31.10.2025
(51) Int. Cl.: B29B 11/16, B29C 65/02, B29C 70/22, B29C 70/24, B29C 70/48, D03D 11/02, D03D 25/00, F01D 5/14, F01D 5/28, F01D 9/04

(54) **METHOD OF MANUFACTURING A COMPOSITE COMPONENT FOR A GAS TURBINE ENGINE**

(30) Priority: 01.11.2024 US 202463715144 P
(71) Applicant: General Electric Company, Cincinnati, Ohio 45215 (US)
(72) Inventor: GILBERT, Aaron, Lynn, 01910 (US); XIE, Ming, Evendale, 45215 (US); WU, Wei, Evendale, 45241 (US); WANG, Mingchao, Evendale, 45215 (US)
(74) Representative: Openshaw & Co.

(57) **Abstract**

A method of manufacturing a composite component having an outer shell, an inner hub, and a plurality of struts connecting the outer shell and the inner hub. A plurality of outer shell preform portions having bifurcated strut portions are connected together to form an outer shell hoop preform, and a plurality of inner hub preform portions having bifurcated strut portions are connected together to form an inner hub hoop preform. The bifurcated strut portions are arranged to extend between the outer shell hoop preform and the inner hub hoop preform, and are arranged adjacent to one another to form a strut preform. A matrix material is injected into the mold tooling structure and a curing process is applied to the mold tooling structure to obtain the composite component.

## Description

### CROSS REFERENCE TO RELATED APPLICATIONS

The present application claims the benefit of U.S. Provisional Patent Application No. 63/715,144, filed on November 1, 2024, which is hereby incorporated by reference herein in its entirety.

### TECHNICAL FIELD

The present disclosure relates to composite components and methods of forming the composite components, particularly, aircraft composite components for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine of for an aircraft, according to an aspect of the present disclosure.
FIG. 2A is a schematic view of a three-dimensional fiber weave pattern, according to an aspect of the present disclosure.
FIG. 2B is a schematic, cross-sectional view of the fiber weave pattern shown in FIG. 2A taken along line 2B-2B in FIG. 2A, according to an aspect of the present disclosure.
FIG. 2C is a schematic, cross-sectional view of a fiber weave pattern similar to the fiber weave pattern shown in FIG. 2A, but with a different interlocking fiber pattern, according to an aspect of the present disclosure.
FIG. 2D is a schematic, cross-sectional view of a fiber weave pattern similar to the fiber weave pattern shown in FIG. 2A, but with another interlocking fiber pattern, according to an aspect of the present disclosure.
FIG. 3 is a flow chart of a general process of manufacturing a composite component that may be used in the turbine engine of FIG. 1, according to an aspect of the present disclosure.
FIG. 4 is a schematic, forward aft-looking view of a vane structure, taken at plane 4-4 of FIG. 1, according to an aspect of the present disclosure.
FIG. 5 is a schematic, top aft-looking perspective view of the vane structure of FIG. 4, according to an aspect of the present disclosure.
FIG. 6 is a cross-sectional view, taken at plane 6-6 of FIG. 4, through the vane structure of FIG. 4, according to an aspect of the present disclosure.
FIG. 7 is a schematic, aft-looking layout of a preform assembly used in manufacturing a composite component, according to an aspect of the present disclosure.
FIG. 8 is a schematic, aft looking view of an outer shell preform portion that may be implemented in the preform assembly of FIG. 7, according to an aspect of the present disclosure.
FIG. 9 is an enlarged view of a first outer shell frame connection end, according to an aspect of the present disclosure.
FIG. 10 is an enlarged view of a second outer shell frame connection end, according to an aspect of the present disclosure.
FIG. 11 is an enlarged detail view of an outer shell frame preform connection, taken at detail view 330 of FIG. 7, according to an aspect of the present disclosure.
FIG. 12 is an enlarged detail view of an outer shell frame preform connection, taken at detail view 332 of FIG. 7, according to an aspect of the present disclosure.
FIG. 13 depicts an alternate outer shell frame preform connection to that shown in FIG. 11, according to an aspect of the present disclosure.
FIG. 14 depicts an alternate outer shell frame preform connection to that shown in FIG. 13, according to another aspect of the present disclosure.
FIG. 15 is a schematic, aft looking view of an inner hub preform portion that may be implemented in the preform assembly of FIG. 7, according to an aspect of the present disclosure.
FIG. 16 is an enlarged view of a first inner hub frame connection end, according to an aspect of the present disclosure.
FIG. 17 is an enlarged view of a second inner hub frame connection end, according to an aspect of the present disclosure.
FIG. 18 is an enlarged detail view of an inner hub frame preform connection, taken at detail view 380 of FIG. 7, according to an aspect of the present disclosure.
FIG. 19 is an enlarged detail view of an inner hub frame preform connection, taken at detail view 382 of FIG. 7, according to an aspect of the present disclosure.
FIG. 20 is a schematic, aft looking view of the outer shell preform portion of FIG. 8 and the inner hub preform portion of FIG. 15, as arranged for forming the strut preform of FIG. 7, according to an aspect of the present disclosure.
FIG. 21 is a cross-sectional view of the strut preform, taken at plane 21-21 of FIG. 20, according to an aspect of the present disclosure.
FIG. 22 is a cross-sectional view of the strut preform of FIG. 21, taken at plane 22-22 of FIG. 21, according to an aspect of the present disclosure.
FIG. 23 is an enlarged view of a portion of the preform assembly of FIG. 7, taken at detail view 410 of FIG. 7, according to an aspect of the present disclosure.
FIG. 24 is an enlarged view of a portion of the preform assembly of FIG. 23, taken at detail view 420 of FIG. 23, according to an aspect of the present disclosure.
FIG. 25 is a schematic view of a mold tooling structure that may be utilized in manufacturing the guide vane structure of FIG. 4, according to an aspect of the present disclosure.
FIG. 26 is a schematic, aft looking view of an alternate outer shell preform portion to that shown in FIG. 8 that may be implemented in the preform assembly of FIG. 7, according to another aspect of the present disclosure.
FIG. 27 is a schematic, aft looking view of an alternate inner hub preform portion to that shown in FIG. 15 that may be implemented in the preform assembly of FIG. 7, according to another aspect of the present disclosure.
FIG. 28 is a schematic, aft looking view of the alternate outer shell preform portion of FIG. 26 and the alternate inner hub preform portion of FIG. 27, as arranged for forming the strut preform of FIG. 7, according to an aspect of the present disclosure.
FIG. 29 is a flowchart of process steps for a method of manufacturing a composite component, according to an aspect of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially" is not to be limited to the precise value specified. In at least some instances, the approximating language may correspond to the precision of an instrument for measuring the value, or the precision of the methods or the machines for constructing or manufacturing the components and/or systems. For example, the approximating language may refer to being within a one, two, four, ten, fifteen, or twenty percent margin in either individual values, range(s) of values, and/or endpoints defining range(s) of values.

The terms "vane" and "strut" may be used interchangeably herein, and generally refer to a structural component implemented to provide structural support between two circular (or cylindrical or conical) elements of a gas turbine engine, to redirect a flow of air passing through two circular (or cylindrical or conical) elements, or both.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

"Preform" as used herein is a piece of three-dimensional woven fabric formed by a plurality of reinforcing fibers including warp fiber tows and weft fiber tows.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods including but not limited to melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

Traditional two-dimensional (2D) layup designs typically used for forming composite gas turbine engine components are challenging to manufacture and may have limited interlaminar strength. Specifically, composite components for gas turbine engines are generally constructed with hand laid plies or by combining multiple woven or prefabricated preforms into one molded part. Hand layup or assembly of preforms increases the labor and costs required to build the component. Assembly of preforms also comes with assembly and positioning challenges. Moreover, a composite component formed from 2D plies or multiple preforms will be more likely to have limited interlaminar loading capability.

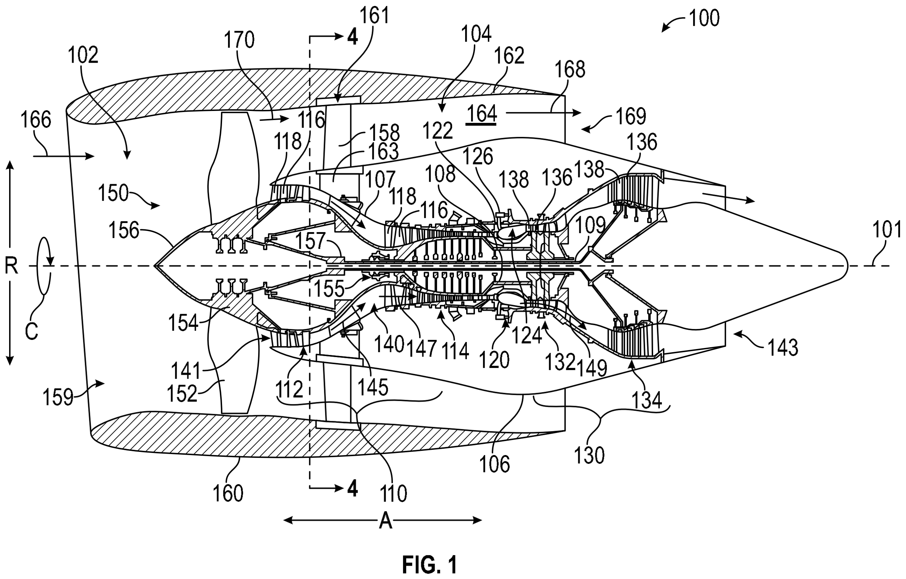

The composite materials discussed herein may be particularly suitable for use in turbine engines for an aircraft. FIG. 1 is a schematic, cross-sectional view a turbine engine 100 that may be used on an aircraft (not shown). The turbine engine 100 has an axial direction A (extending parallel to a longitudinal centerline axis 101, shown for reference in FIG. 1), a radial direction R, and a circumferential direction. C. The circumferential direction C extends in a direction rotating about the longitudinal centerline axis 101 (e.g., rotating about the axial direction A). In the embodiment depicted in FIG. 1, the turbine engine 100 is a high bypass turbofan engine, including a fan section 102 and a turbo-engine 104 disposed downstream from the fan section 102. While FIG. 1 depicts a high bypass turbofan engine, the present disclosure is not limited to being implemented in a high bypass turbofan engine and may be implemented in other types of engines instead, including turbojet engines, turboprop engines, or turbo machinery in general.

The turbo-engine 104 depicted in FIG. 1 includes a generally tubular outer casing 106 that defines a core inlet 141, which is an annular inlet about the longitudinal centerline axis 101. The outer casing 106 encases the turbo-engine 104, and the turbo-engine 104 includes, in a serial flow relationship, a compressor section 110, including a booster or a low-pressure (LP) compressor 112 and a high-pressure (HP) compressor 114, a combustion section 120, a turbine section 130, including a high-pressure (HP) turbine 132 and a low-pressure (LP) turbine 134, and a core air exhaust nozzle 143. The compressor section 110, the combustion section 120, the turbine section 130, and the core air exhaust nozzle 143 together define, at least in part, a core air flow path 140 extending from the core inlet 141 to the core air exhaust nozzle 143, and through which a core air 145 flows.

Each of the LP compressor 112 and the HP compressor 114 may include a plurality of compressor stages. In each stage, a plurality of compressor blades 116 rotate relative to a corresponding plurality of static compressor vanes 118 to compress or to pressurize the core air 145 passing through the stage. In a single compressor stage, a plurality of the compressor blades 116 can be provided in a ring, extending radially outwardly (in the radial direction R) relative to the longitudinal centerline axis 101 from a compressor rotor (shown generally) that includes a disk. The corresponding static compressor vanes 118 are positioned upstream of and adjacent to the rotating compressor blades 116. The compressor vanes 118, for a stage of the compressor, can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a set of turbine blades 136 rotates relative to a corresponding set of static turbine vanes 138 to extract energy from combustion gases 149 passing through the stage. The turbine blades 136 may be a part of a turbine rotor (shown generally). Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138, for a stage of the turbine, can be mounted to the core casing 107 in a circumferential arrangement.

In the combustion section 120, fuel (not shown) is received from a fuel system (not shown), and is injected into a combustion chamber 124 of a combustor 122 by fuel nozzles 126. The fuel is mixed with the compressed air 147 from the compressor section 110 to form a fuel and air mixture (not shown), which is ignited and burned in the combustor 122, generating combustion products (i.e., combustion gases 149) within the combustor 122. The combustion gases 149 are discharged from the combustion chamber 124 to the turbine section 130. The combustion gases 149 may be directed into the turbine blades 136 of the HP turbine 132 and, then, into the turbine blades 136 of the LP turbine 134, such that the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. More specifically, the turbo-engine 104 includes a high-pressure (HP) shaft 108 drivingly connecting the HP turbine 132 to the HP compressor 114, and a low-pressure (LP) shaft 109 drivingly connecting the LP turbine 134 to the LP compressor 112. The HP shaft 108 and the LP shaft 109 may also be referred to as spools. More specifically, the HP turbine rotors of the HP turbine 132 are connected to the HP shaft 108, and the HP compressor rotors of the HP compressor 114 are connected to the HP shaft 108. When the turbine blades 136 and, thus, the HP turbine rotors of the HP turbine 132 are rotated by the combustion gases 149 flowing through the core air flow path 140, the HP turbine rotors of the HP turbine 132 rotate the HP compressor rotors and, thus, the compressor blades 116 of the HP compressor 114 via the HP shaft 108. Similarly, the LP turbine rotors of the LP turbine 134 are connected to the LP shaft 109, and the LP compressor rotors of the LP compressor 112 are connected to the LP shaft 109. When the LP turbine rotors and, thus, LP the turbine blades 136 of the LP turbine 134 are rotated by the combustion gases 149 flowing through the core air flow path 140, the LP turbine rotors of the LP turbine 134 rotate the LP compressor rotors and, thus, the compressor blades 116 of the LP compressor 112 via the LP shaft 109. The HP shaft 108 and the LP shaft 109 are disposed coaxially about the longitudinal centerline axis 101. The HP shaft 108 has a greater diameter than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the HP/LP compressor rotors and the HP/LP turbine rotors.

The fan section 102 shown in FIG. 1 includes a fan 150 having a plurality of fan blades 152 coupled to a disk 154. The fan blades 152 and the disk 154 are connected to a fan shaft 157, which is connected to a reduction gearbox 155 that is connected with and driven by the LP shaft 109. Thus, the fan blades 152 and the disk 154 are rotatable, together, about the longitudinal centerline axis 101 and are driven by rotation of the LP shaft 109. The disk 154 is covered by a rotatable fan hub 156 that is aerodynamically contoured to promote an airflow through the plurality of fan blades 152.

Further, a nacelle 160 circumferentially surrounds the fan 150, or at least a portion of the turbo-engine 104, or both. The nacelle 160 may also be referred to as an annular fan casing or an outer nacelle. The nacelle 160 is supported relative to the turbo-engine 104 by a plurality of circumferentially spaced guide vanes (or struts) 158 (two shown in FIG. 1) that are part of a vane structure 161 that is connected to an intermediate frame structure 163. The vane structure 161 will be described in more detail below, and the vane structure 161 may be one example of a composite component 161' that may be implemented in the turbine engine 100. A downstream section 162 of the nacelle 160 extends over an outer portion of the turbo-engine 104 and, more specifically, a downstream portion of the outer casing 106 so as to define a bypass airflow passage 164 therebetween.

During operation of the turbine engine 100, a volume of air 166 enters the turbine engine 100 through an inlet 159 of the nacelle 160, or the fan section 102, or both. As the volume of air 166 passes across the fan blades 152, a first portion of the air 166 is propelled by the fan blades 152 to generate a swirled fan airflow 170 that is directed or routed toward the vanes 158, where the swirled fan airflow 170 may be redirected by the vanes 158 from the swirled fan airflow 170 to be an axial airflow in the axial direction A and into the bypass airflow passage 164 as bypass air 168. A second portion of air 166 (shown schematically as core air 145) is directed or is routed into the core inlet 141 to an upstream section of the core air flow path 140. Simultaneously, with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on an aircraft. Some suitable aircraft include, for example, an airplane, a helicopter, and an unmanned aerial vehicle (UAV). In other embodiments, the turbine engine may be any other turbine engine, such as an industrial turbine engine incorporated into a power generation system, or a nautical turbine engine on a ship or other vessel.

Various components of the turbine engine 100 may be formed from composite materials. These components are referred to herein as composite components. The fan blades 152, a fan casing having the vanes 158. The compressor blades 116, and the compressor vanes 118 may be made from PMC materials, for example. Other composites, such as CMC materials, may be used for other components, including, for example, the turbine blades 136, the turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

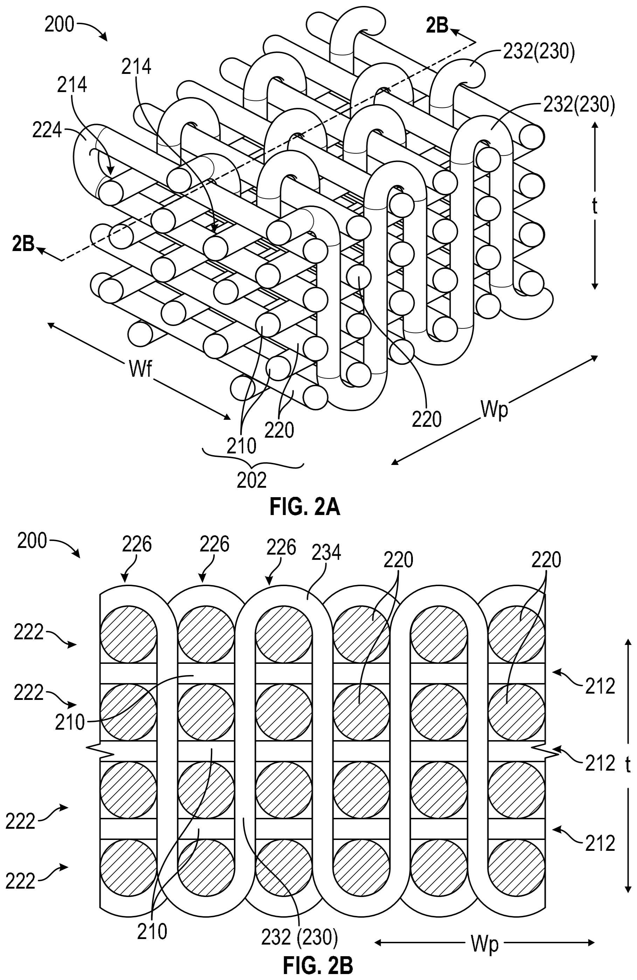

FIG. 2A is a schematic view showing an exemplary three-dimensional fiber weave pattern that may be used to form a three-dimensional woven fabric 200. FIG. 2B is a schematic, cross-sectional view taken along plane 2B-2B in FIG. 2A. In embodiments discussed herein, the composite components may be formed from a plurality of reinforcing fibers and, more specifically, a plurality of reinforcing fiber tows 202. The plurality of reinforcing fiber tows 202 are woven together in a three-dimensional pattern to form the three-dimensional woven fabric 200. The plurality of reinforcing fiber tows 202 include a plurality of first fiber tows, which, in this embodiment, is a plurality of warp fiber tows 210. The plurality of reinforcing fiber tows 202 also include a plurality of second fiber tows, which, in this embodiment, is a plurality of weft fiber tows 220. The weft fiber tows 220 are oriented transversely to the warp fiber tows 210, and, in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction t may also be referred to as a z direction. The warp fiber tows 210 are arrayed in both the weft direction Wf and the thickness direction t. The warp fiber tows 210 may be parallel to each other in both the weft direction Wf and the thickness direction t, and the woven fabric 200 may include a plurality of warp fiber layers 212 in the thickness direction t and a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in a thickness direction t, thereby forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tows 220 thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fiber tows 210), and repeating this process until the woven fabric 200 is formed. The weft fiber tows 220 may be parallel to each other in both the warp direction Wp and the thickness direction t, and the woven fabric 200 may include the plurality of weft fiber layers 222 in the thickness direction t and a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern, and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

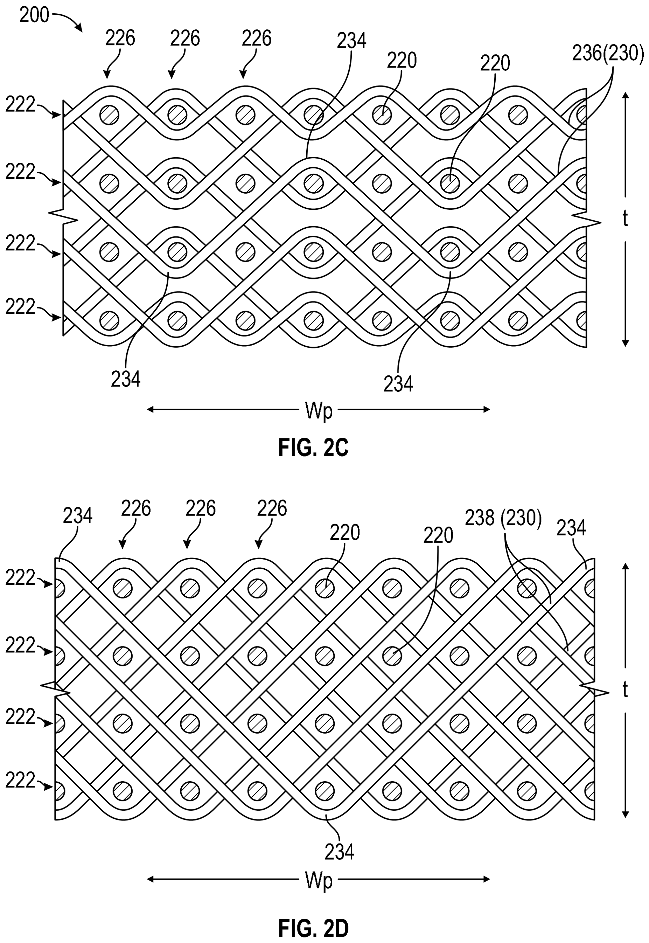

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend between more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to FIG. 2B. The weft fiber tows 220 are omitted in FIGS. 2C and 2D for clarity.

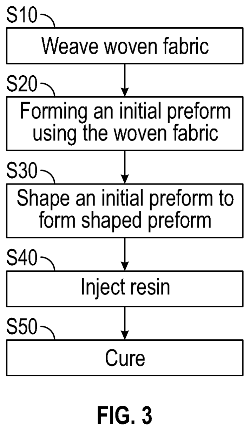

FIG. 3 is a flow chart of a general process of manufacturing a composite component that may be used in the turbine engine of FIG. 1. The method includes, in step S10 weaving the woven fabric 200, such as on a loom. In step S20, the method includes forming an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. The shaped preform may form a final preform, but optionally, additional machining processes and manufacturing processes, such as adding inserts, may be carried out on the shaped preform to form the final preform.

After the preform is complete (i.e., the final preform), a matrix material may be injected into the preform in step S40 to generate an infiltrated (or an impregnated) preform. When the composite component is a polymer matrix composite, polymers, a resin, or both, may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the preform may be formed using prepreg fiber tows, and, in such an embodiment, this step (step S40) may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final airfoil shape or the contour of the fan blade. Additionally, the composite component can be coated with one or more suitable coatings, such as, e.g., an environmental barrier coating (EBC) or a polyurethane surface coating.

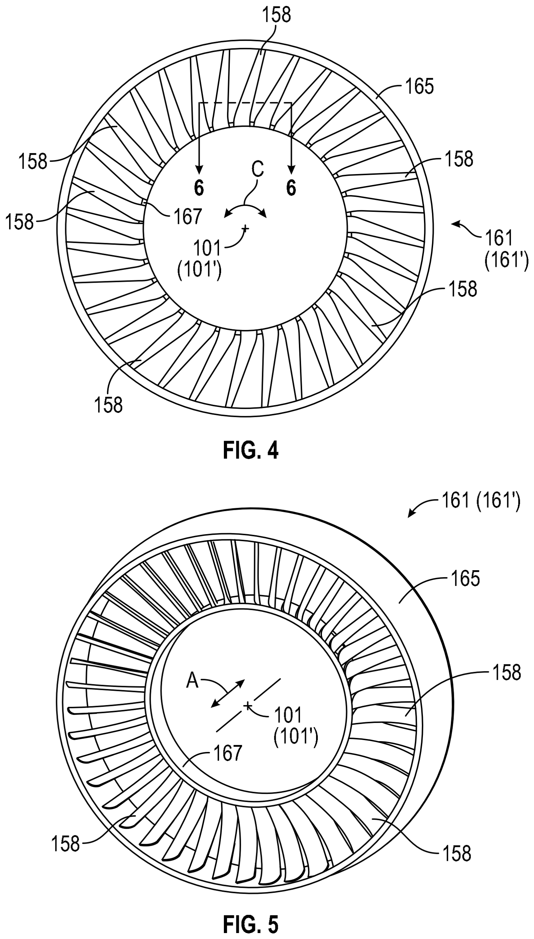

FIG. 4 is a schematic, forward aft-looking view of the vane structure 161, taken at plane 4-4 of FIG. 1, according to an aspect of the present disclosure. FIG. 5 is a schematic, top aft-looking perspective view of the vane structure 161 of FIG. 4, according to an aspect of the present disclosure. Referring collectively to FIG. 4 and FIG. 5, only the vane structure 161 is shown, with other elements of FIG. 1 (e.g., the nacelle 160 and the turbo-engine components within the outer casing 106) being omitted merely for clarity. In FIG. 4 and FIG. 5, the vane structure 161 may be an outlet guide vane structure arranged downstream of the fan 150 and that includes the vanes 158 of FIG. 1. However, the vane structure 161 is not limited to an outlet guide vane structure and, in other aspects, the vane structure 161 may be an inlet guide vane structure, or may be a stator vane structure that may be implemented in the compressor section 110 or in the turbine section 130 of the turbo-engine 104.

As shown in FIG. 4, and as will be described in more detail below, the vane structure 161 includes an outer shell 165 that extends circumferentially about a vane structure centerline axis 101', which is congruent to the longitudinal centerline axis 101 of the turbine engine 100, and also extends in the axial direction A (FIG. 1). The vane structure 161 also includes an inner hub 167 that extends circumferentially about the vane structure centerline axis 101' and that extends in the axial direction A. The plurality of vanes 158 (also referred to as struts) extend between the outer shell 165 and the inner hub 167, and are circumferentially spaced apart from one another about the vane structure centerline axis 101' and connect the outer shell 165 and the inner hub 167 together. The vane structure 161 is an example of a composite component 161' that may be implemented in the turbine engine 100 and a description of a composite vane structure and a method of manufacturing the composite vane structure will be described in more detail below.

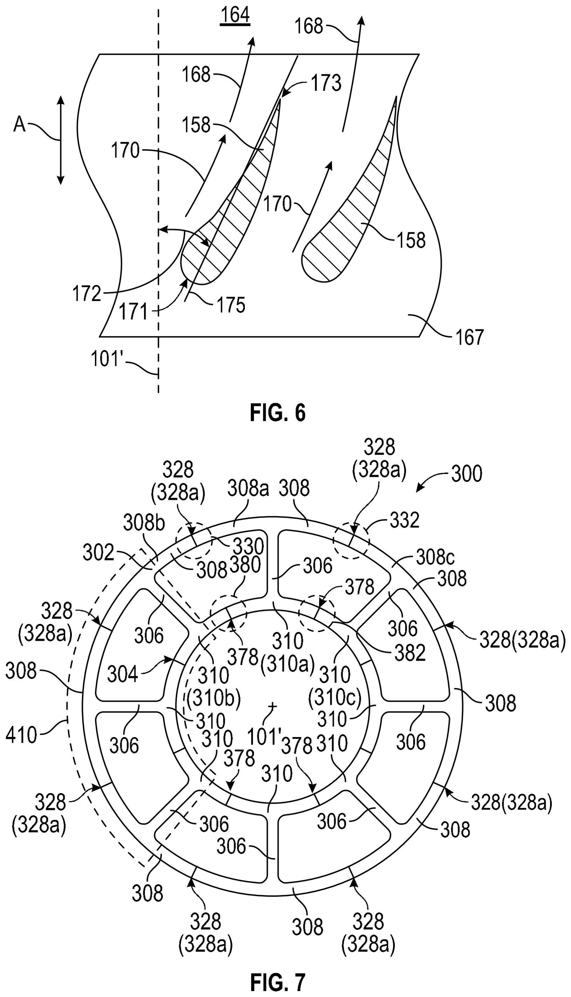

FIG. 6 is a cross-sectional view, taken at plane 6-6 of FIG. 4, through the vane structure 161 of FIG. 4, according to an aspect of the present disclosure. As shown in FIG. 6, the vanes 158 of the vane structure 161 may have an airfoil shape (e.g., a NACA (National Advisory Committee for Aeronautics) airfoil shape) and may include camber so as to be a curved vane. In this manner, the vanes 158 can receive the swirled fan airflow 170 and redirect the swirled fan airflow 170 to be an axial airflow flowing in the axial direction A into the bypass airflow passage 164 as the bypass air 168. Further, each of the vanes 158 may be arranged at an angle 172 with respect to the vane structure centerline axis 101', where the angle 172 is taken along a chord 175 of the vane 158 from a leading edge 171 to a trailing edge 173 of the vane 158.

FIG. 7 is a schematic, aft-looking layout of a preform assembly 300 used in manufacturing a composite component, according to an aspect of the present disclosure. More particularly, the preform assembly 300 of FIG. 7 is configured for manufacturing a vane assembly, such as the vane structure 161 of FIG. 4 and FIG. 5. Generally, a preform assembly consists of multiple individual woven fabric component parts that are woven together to form a general shape of the overall structure of the composite component. As will be described below, the overall preform assembly is then installed in a mold tooling structure and a resin material is injected into the mold tooling structure, and a curing process is applied to the mold tooling structure to form a general shape of the composite component. FIG. 7 depicts the preform assembly 300 as the preform assembly 300 may appear assembled within the mold tooling structure (with the mold tooling structure being omitted in FIG. 7) and, when the mold tooling structure is ready for the injection of the resin material. A process to obtain the preform assembly 300 as shown in FIG. 7 will be described in more detail below. In FIG. 7, the preform assembly 300 includes an outer shell hoop preform 302, an inner hub hoop preform 304, and a plurality of strut preforms 306. As will be described in more detail below, the outer shell hoop preform 302 includes a plurality of outer shell preform portions 308 that are connected together to form the outer shell hoop preform 302, and a plurality of inner hub preform portions 310 that are connected together to form the inner hub hoop preform 304. The plurality of strut preforms 306 are circumferentially spaced apart and extend between, and connect, the outer shell hoop preform 302 with the inner hub hoop preform 304.

Fig. 7 depicts eight strut preforms 306 extending between the outer shell hoop preform 302 and the inner hub hoop preform 304, and each strut preform 306 corresponds to a respective vane 158 (FIG. 4) of the vane structure 161 for which the preform assembly 300 is utilized in manufacturing the vane structure 161. While FIG. 4 and FIG. 5 depict more than eight vanes 158, the depiction of eight strut preforms 306 in FIG. 7 is merely for brevity and clarity of the following description, and, in manufacturing the vane structure 161 of FIG. 4, the number of strut preforms 306 included in the preform assembly 300 would correspond to the number of vanes 158 included in the vane structure 161 of FIG. 4.

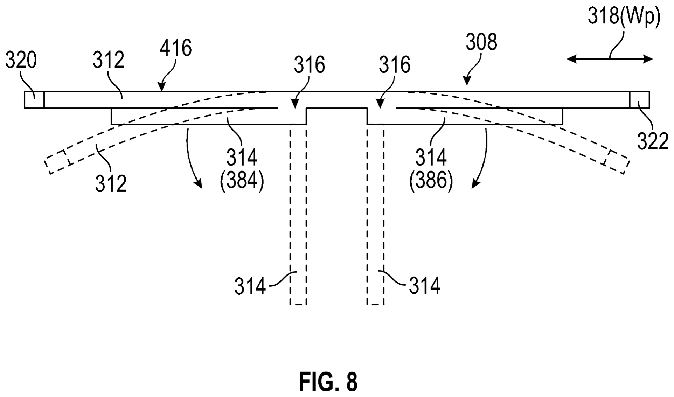

FIG. 8 is a schematic, aft looking view of an outer shell preform portion 308 that may be implemented in the preform assembly 300 of FIG. 7, according to an aspect of the present disclosure. The outer shell preform portion 308 includes an outer shell frame portion 312 and a plurality of bifurcated outer shell strut portions 314 (two shown in FIG. 8). The bifurcated outer shell strut portions 314 are woven integral with the outer shell frame portion 312 at a frame-strut joint portion 316 and are, thereafter, bifurcated from the outer shell frame portion 312. The outer shell frame portion 312 and the plurality of the bifurcated outer shell strut portions 314 may be woven as any of the three-dimensional fabrics described above for FIG. 2A, FIG. 2B, FIG. 2C, or FIG. 2D. In the weaving, however, the warp fiber tows (e.g., the warp fiber tows 210 of FIG. 2A) are preferably woven in a hoop direction 318, while weft fiber tows (e.g., the weft fiber tows 220 of FIG. 2A) are woven orthogonal to the warp fiber tows in a direction extending into and out of the view of FIG. 8. As will be described more detail below, but, as shown with dashed lines in FIG. 8, the plurality of bifurcated outer shell strut portions 314 are rotated about the frame-strut joint portion 316 to be extended inward from the outer shell frame portion 312. In addition, as shown with dashed lines in FIG. 8, during the assembly of the plurality of outer shell preform portions to form the outer shell hoop preform 302, the outer shell frame portion 312 is arranged to generally form a circumferential portion of the outer shell hoop preform 302.

The outer shell frame portion 312 is also woven to include a first outer shell frame connection end 320 and a second outer shell frame connection end 322 opposite the first outer shell frame connection end 320. As will be described in more detail below, the first outer shell frame connection end 320 and the second outer shell frame connection end 322 are implemented to connect the plurality of outer shell preform portions 308 together so as to form the outer shell hoop preform 302.

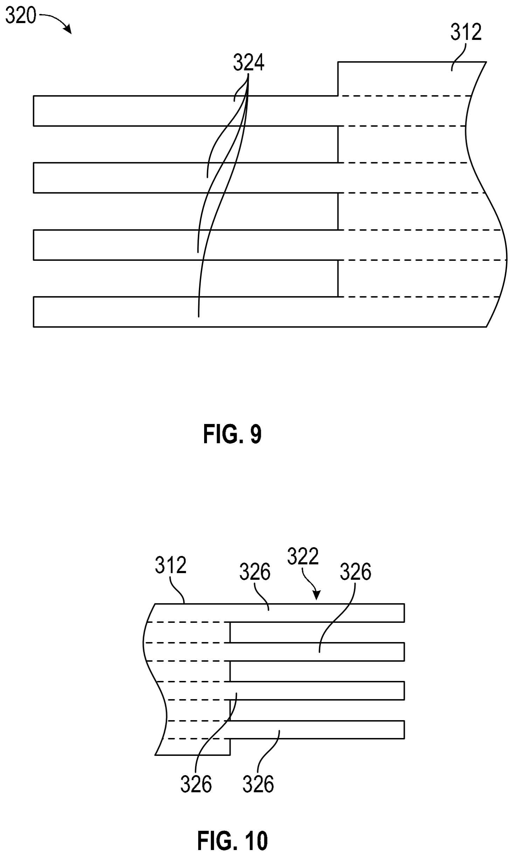

FIG. 9 is an enlarged view of the first outer shell frame connection end 320, according to an aspect of the present disclosure. FIG. 10 is an enlarged view of the second outer shell frame connection end 322. As shown in FIG. 9, the first outer shell frame connection end 320 may include a plurality of first end bifurcated layers 324. As shown in FIG. 10, second outer shell frame connection end 322 may include a plurality of second end bifurcated layers 326.

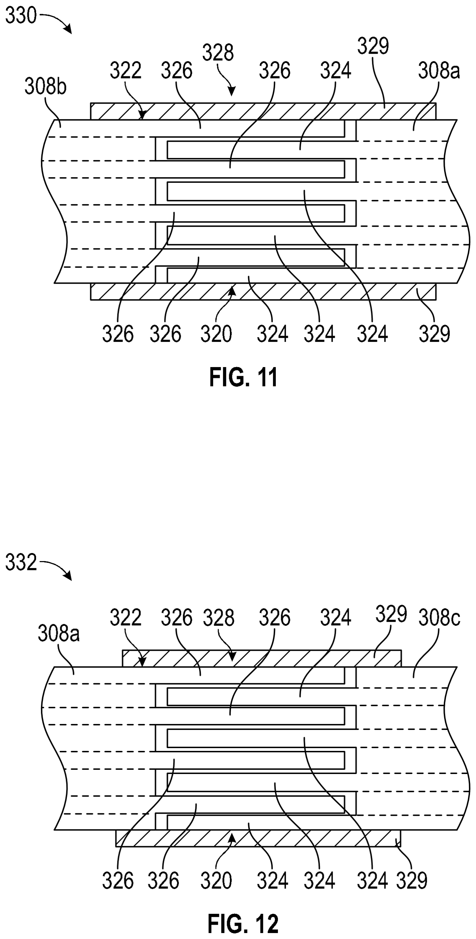

FIG. 11 is an enlarged detail view of an outer shell frame preform connection 328, taken at detail view 330 of FIG. 7, according to an aspect of the present disclosure. Referring collectively to FIG. 7 and FIG. 11, the outer shell frame preform connection 328 is shown for connecting a first outer shell preform portion 308a with a second outer shell preform portion 308b that is arranged adjacent to the first outer shell preform portion 308a. As shown in FIG. 11, the first outer shell frame connection end 320 of the first outer shell preform portion 308a is connected with the second outer shell frame connection end 322 of the second outer shell preform portion 308b. More specifically, the plurality of first end bifurcated layers 324 of the first outer shell frame connection end 320 of the first outer shell preform portion 308a overlap with the plurality of second end bifurcated layers 326 of the second outer shell frame connection end 322 of the second outer shell preform portion 308b. Thus, the outer shell frame preform connection 328 is arranged as a finger joint connection.

Once the outer shell preform connection 328 has been formed, additional preform layers 329 may be added as an axial wrap to wrap around the outer shell frame preform connection 328. The additional preform layers 329 may be either a three-dimensional fabric layer similar to that described above with regard to any of FIG. 2A, FIG. 2B, FIG. 2C, and FIG. 2D. Alternatively, the additional preform layers 329 may be two-dimensional fabric layers that are overlaid onto the first outer shell frame connection end 320 and onto the second outer shell frame connection end 322.

FIG. 12 is an enlarged detail view of an outer shell frame preform connection 328, taken at detail view 332 of FIG. 7, according to an aspect of the present disclosure. Referring collectively to FIG. 7 and to FIG. 12, the outer shell frame preform connection 328 is shown for connecting the first outer shell preform portion 308a with a third outer shell preform portion 308c that is arranged adjacent to the first outer shell preform portion 308a. As shown in FIG. 12, the second outer shell frame connection end 322 of the first outer shell preform portion 308a is connected with the first outer shell frame connection end 320 of the third outer shell preform portion 308c. More specifically, the plurality of second end bifurcated layers 326 of the second outer shell frame connection end 322 of the first outer shell preform portion 308a overlap with the plurality of first end bifurcated layers 324 of the first outer shell frame connection end 320 of the third outer shell preform portion 308c. Thus, again, the outer shell frame preform connection 328 of FIG. 12 is arranged as a finger joint connection.

In the same manner described above for the FIG. 11 aspect, for the FIG. 12 aspect, once the outer shell preform connection 328 has been formed, additional preform layers 329 may be added to wrap around the outer shell frame preform connection 328. The additional preform layers 329 may be either a three-dimensional fabric layer similar to that described above with regard to any of FIG. 2A, FIG. 2B, FIG. 2C, and FIG. 2D. Alternatively, the additional preform layers 329 may be two-dimensional fabric layers that are overlaid onto the first outer shell frame connection end 320 and onto the second outer shell frame connection end 322.

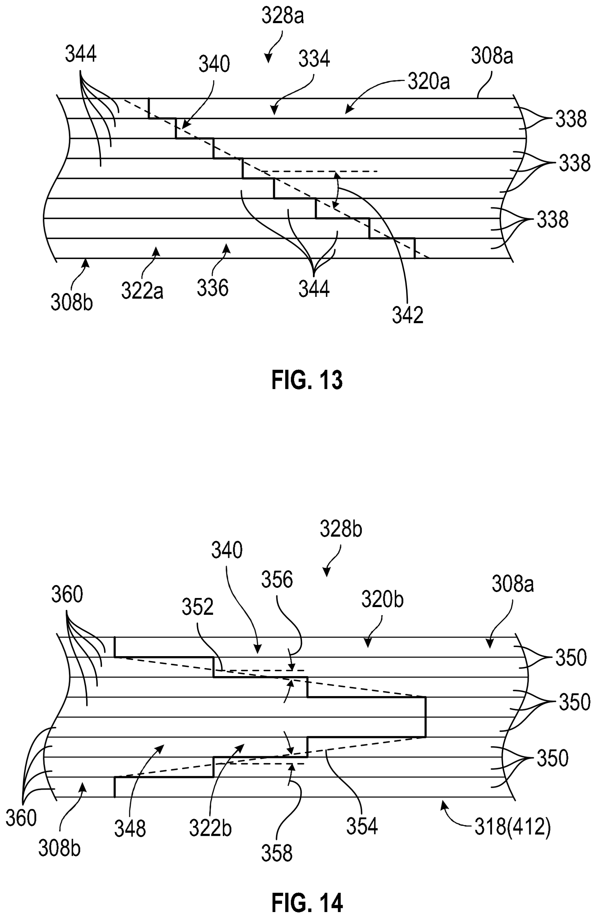

FIG. 13 depicts an alternate outer shell frame preform connection 328a to that shown in FIG. 11, according to an aspect of the present disclosure. In the FIG. 13 aspect, the first outer shell preform portion 308a includes an alternate first outer shell frame connection end 320a and the second outer shell preform portion 308b includes an alternate second outer shell frame connection end 322a. The alternate first outer shell frame connection end 320a includes a first end outer shell scarf joint connecting portion 334 that includes a plurality of first bifurcated layers 338 that are arranged to extend in a staggered manner along a scarf angle line 340 (shown generally as a dashed line), which may have a scarf angle 342, such as forty-five degrees. The scarf angle 342 is not limited to forty-five degrees and other angles may be implemented instead. Similarly, the second outer shell frame connection end 322a includes a second end outer shell scarf joint portion 336 that includes a plurality of second bifurcated layers 344, which are similarly arranged to extend in a staggered manner along the scarf angle line 340. The plurality of first bifurcated layers 338 and the plurality of second bifurcated layers 344 are joined together along the scarf angle line 340 so as to form the alternate outer shell frame preform connection 328a. While FIG. 13 depicts the first bifurcated layers 338 and the second bifurcated layers 344 abutting against one another along the scarf angle line 340, other configurations may be implemented instead, including the first bifurcated layers 338 and the second bifurcated layers 344 overlapping one another along the scarf angle line 340.

FIG. 14 depicts an alternate outer shell frame preform connection 328b to that shown in FIG. 13, according to another aspect of the present disclosure. In the FIG. 14 aspect, the first outer shell preform portion 308a includes an alternate first outer shell frame connection end 320b and the second outer shell preform portion 308b includes an alternate second outer shell frame connection end 322b. The alternate first outer shell frame connection end 320b includes a first end outer shell scarf joint connecting portion 346 that includes a plurality of first bifurcated layers 350 that are arranged to extend in a staggered manner along a first scarf angle line 352 (shown generally as a dashed line) and a second scarf angle line 354, where the first scarf angle line 352 and the second scarf angle line 354 generally form a V shape with each other with respect to the alternate second outer shell frame connection end 322b. The first scarf angle line 352 may be arranged at a first scarf joint angle 356 (e.g., thirty degrees) and the second scarf angle line 354 may be arranged a second scarf joint angle 358 (e.g., thirty degrees), although other angles may be implemented instead. Similarly, the alternate second outer shell frame connection end 322b includes the second end outer shell scarf joint connecting portion 348 that includes a plurality of second bifurcated layers 360, which are similarly arranged to extend in a staggered manner along the first scarf angle line 352 and along the second scarf angle line 354. The plurality of first bifurcated layers 350 and the plurality of second bifurcated layers 360 are joined together along the first scarf angle line 352 and the along the second scarf angle line 354 in a V-shaped joint so as to form the alternate outer shell frame preform connection 328b, which, in the FIG. 14 aspect, is a double scarf joint. While FIG. 14 depicts the first bifurcated layers 350 and the second bifurcated layers 360 abutting against one another along the first scarf angle line 352 and along the second scarf angle line 354, other configurations may be implemented instead, including the first bifurcated layers 350 and the second bifurcated layers 360 overlapping one another along the first scarf angle line 352 and along the second scarf angle line 354.

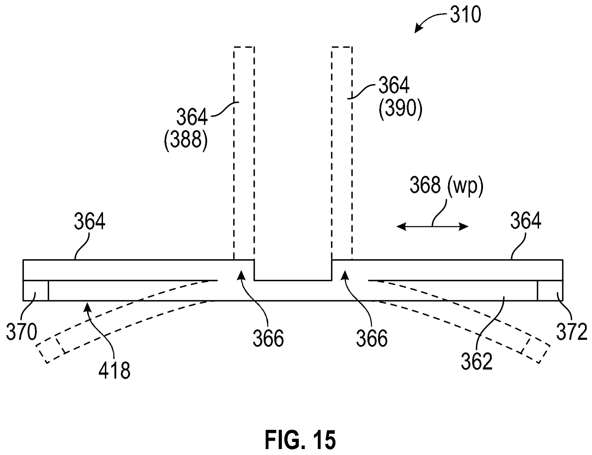

FIG. 15 is a schematic, aft looking view of an inner hub preform portion 310 that may be implemented in the preform assembly 300 of FIG. 7, according to an aspect of the present disclosure. The inner hub preform portion 310 includes an inner hub frame portion 362 and a plurality of bifurcated inner hub strut portions 364 (two shown in FIG. 15). The bifurcated inner hub strut portions 364 are woven integral with the inner hub frame portion 362 at a frame-strut joint portion 366 and are, thereafter, bifurcated from the inner hub frame portion 362. The inner hub frame portion 362 and the plurality of the bifurcated inner hub strut portions 364 may be woven as any of the three-dimensional fabrics described above for FIG. 2A, FIG. 2B, FIG. 2C, or FIG. 2D. In the weaving, however, the warp fiber tows (e.g., the warp fiber tows 210 of FIG. 2A) are preferably woven in a hoop direction 368, while weft fiber tows (e.g., the weft fiber tows 220 of FIG. 2A) are woven orthogonal to the warp fiber tows in a direction extending into and out of the view of FIG. 15. As will be described more detail below, but, as shown with dashed lines in FIG. 15, the plurality of bifurcated inner hub strut portions 364 are rotated about the frame-strut joint portion 366 to be extended outward from the inner hub frame portion 362. In addition, as shown with dashed lines in FIG. 15, during the assembly of the plurality of inner hub preform portions 310 to form the inner hub hoop preform 304, the inner hub frame portion 362 is arranged to generally form a circumferential portion of the inner hub hoop preform 304.

The inner hub frame portion 362 is also woven to include a first inner hub frame connection end 370 and a second inner hub frame connection end 372 opposite the first inner hub frame connection end 370. As will be described in more detail below, the first inner hub frame connection end 370 and the second inner hub frame connection end 372 are implemented to connect the plurality of inner hub preform portions 310 together so as to form the inner hub hoop preform 304.

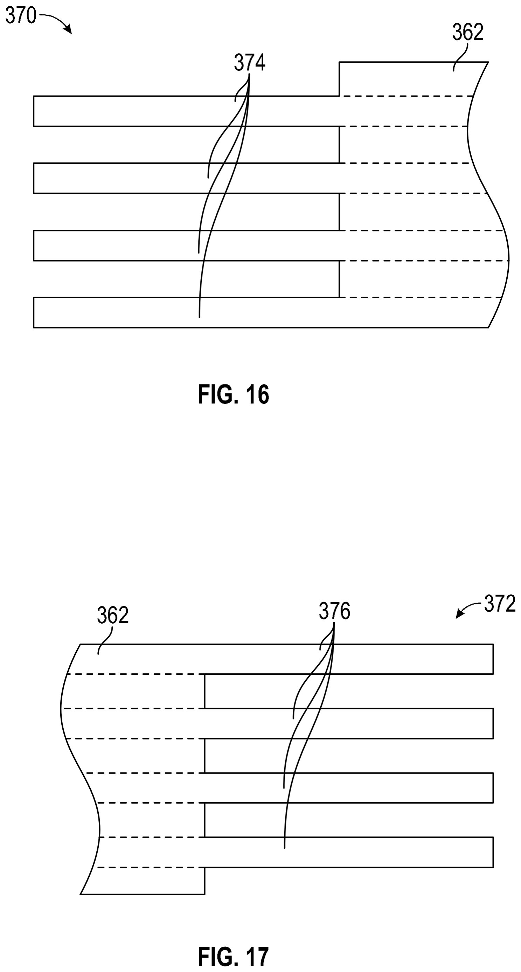

FIG. 16 is an enlarged view of the first inner hub frame connection end 370, according to an aspect of the present disclosure. FIG. 17 is an enlarged view of the second inner hub frame connection end 372. As shown in FIG. 16, the first inner hub frame connection end 370 may include a plurality of first end bifurcated layers 374. As shown in FIG. 17, the second inner hub frame connection end 372 may include a plurality of second end bifurcated layers 376.

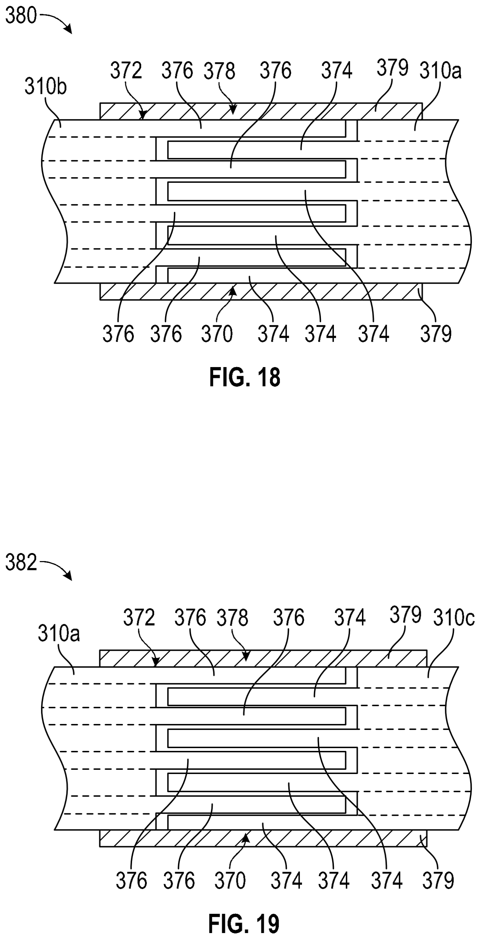

FIG. 18 is an enlarged detail view of an inner hub frame preform connection 378, taken at detail view 380 of FIG. 7, according to an aspect of the present disclosure. Referring collectively to FIG. 7 and FIG. 18, the inner hub frame preform connection 378 is shown for connecting a first inner hub preform portion 310a with a second inner hub preform portion 310b that is arranged adjacent to the first inner hub preform portion 310a. As shown in FIG. 18, the first inner hub frame connection end 370 of the first inner hub preform portion 310a is connected with the second inner hub frame connection end 372 of the second inner hub preform portion 310b. More specifically, the plurality of first end bifurcated layers 374 of the first inner hub frame connection end 370 of the first inner hub preform portion 310a overlap with the plurality of second end bifurcated layers 376 of the second inner hub frame connection end 372 of the second inner hub preform portion 310b. Thus, the inner hub frame preform connection 378 is arranged as a finger joint connection.

In the same manner described above for the FIG. 11 aspect, for the FIG. 18 aspect, once the inner hub preform connection 378 has been formed, additional preform layers 379 may be added as an axial wrap to wrap around the inner hub frame preform connection 378. The additional preform layers 379 may be either a three-dimensional fabric layer similar to that described above with regard to any of FIG. 2A, FIG. 2B, FIG. 2C, and FIG. 2D. Alternatively, the additional preform layers 379 may be two-dimensional fabric layers that are overlaid onto the first inner hub frame connection end 370 and onto the second inner hub frame connection end 372.

FIG. 19 is an enlarged detail view of an inner hub frame preform connection 378, taken at detail view 382 of FIG. 7, according to an aspect of the present disclosure. Referring collectively to FIG. 7 and to FIG. 19, the inner hub frame preform connection 378 is shown for connecting the first inner hub preform portion 310a with a third inner hub preform portion 310c that is arranged adjacent to the first inner hub preform portion 310a. As shown in FIG. 19, the second inner hub frame connection end 372 of the first inner hub preform portion 310a is connected with the first inner hub frame connection end 370 of the third inner hub preform portion 310c. More specifically, the plurality of second end bifurcated layers 376 of the second inner hub frame connection end 372 of the first inner hub preform portion 310a overlap with the plurality of first end bifurcated layers 374 of the first inner hub frame connection end 370 of the third inner hub preform portion 310c. Thus, again, the inner hub frame preform connection 378 of FIG. 19 is arranged as a finger joint connection. The inner hub frame preform connection 378 is not limited to the foregoing finger joint connection, and, instead, the inner hub frame preform connection 378 may be implemented as either of the scarf joint connections depicted in FIG. 13 or in FIG. 14.

In the same manner described above for the FIG. 18 aspect, for the FIG. 19 aspect, once the inner hub preform connection 378 has been formed, additional preform layers 379 may be added to wrap around the inner hub frame preform connection 378. The additional preform layers 379 may be either a three-dimensional fabric layer similar to that described above with regard to any of FIG. 2A, FIG. 2B, FIG. 2C, and FIG. 2D. Alternatively, the additional preform layers 379 may be two-dimensional fabric layers that are overlaid onto the first inner hub frame connection end 370 and onto the second inner hub frame connection end 372.

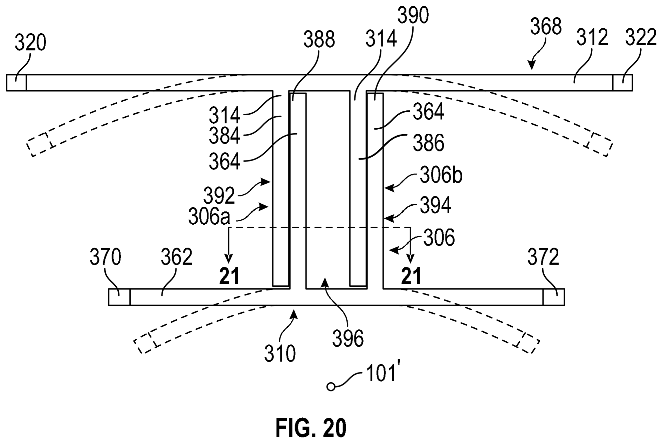

FIG. 20 is a schematic, aft looking view of the outer shell preform portion 308 of FIG. 8 and the inner hub preform portion 310 of FIG. 15 as arranged for forming the strut preform 306 of FIG. 7, according to an aspect of the present disclosure. As described above, each of the outer shell preform portions 308 is connected together to form the outer shell hoop preform 302 (FIG. 7), and each of the inner hub preform portions 310 is connected together to form the inner hub hoop preform 304 (FIG. 7). The inner hub hoop preform 304 is arranged within the outer shell hoop preform 302, and, then, the plurality of strut preforms 306 are formed. In forming each of the plurality of strut preforms 306, as was described above with regard to FIG. 8, each of the plurality of bifurcated outer shell strut portions 314 is extended inward (with respect to the vane structure centerline axis 101') from the outer shell frame portion 312 to extend toward the inner hub preform portion 310. In addition, as was described above with regard to FIG. 15, each of the plurality of bifurcated inner hub strut portions 364 is extended outward (with respect to the vane structure centerline axis 101') from the inner hub frame portion 362 to extend toward the outer shell preform portion 308. In the FIG. 20 aspect, and, as also shown in FIG. 8, the outer shell preform portion 308 includes a first bifurcated outer shell strut portion 384 and a second bifurcated outer shell strut portion 386, and, as also shown in FIG. 15, the inner hub preform portion 310 includes a first bifurcated inner hub strut portion 388 and a second bifurcated inner hub strut portion 390. When assembling the strut preform 306, the first bifurcated outer shell strut portion 384 and the first bifurcated inner hub strut portion 388 are arranged adjacent to one another to be joined together to define a first strut preform portion 306a that forms a first side wall 392 of the strut preform 306. Similarly, the second bifurcated outer shell strut portion 386 and the second bifurcated inner hub strut portion 390 are arranged adjacent to one another to be joined together to define a second strut preform portion 306b that forms a second side wall 394 of the strut preform 306.

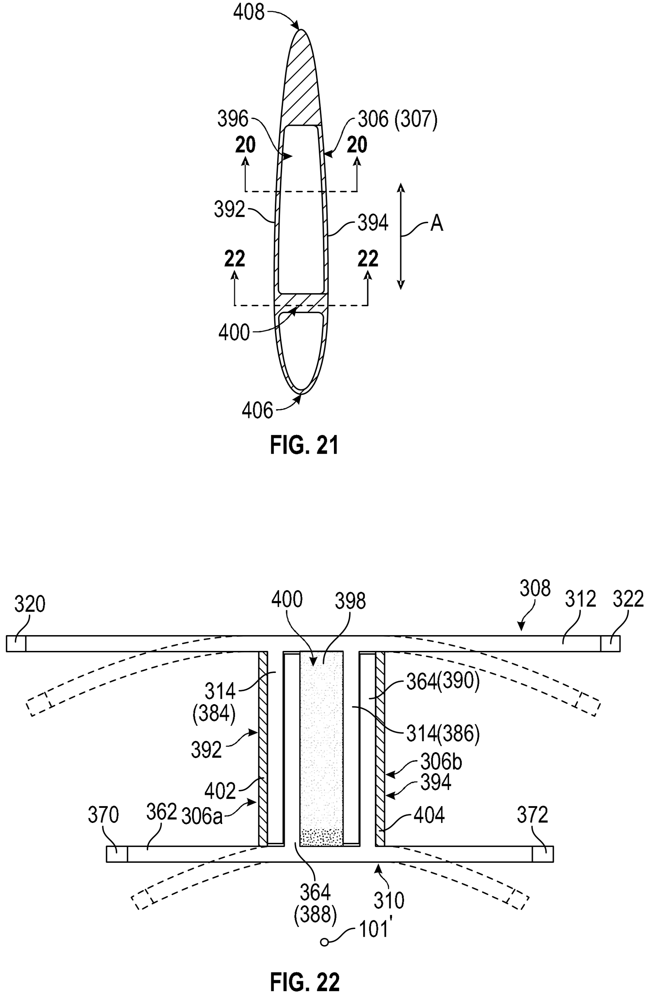

FIG. 21 is a cross-sectional view of the strut preform 306, taken at plane 21-21 of FIG. 20, according to an aspect of the present disclosure. As shown in FIG. 21, the strut preform 306 includes the first side wall 392 and the second side wall 394. FIG. 20 may be taken at, for example, plane 20-20 of FIG. 21, and a hollow core portion 396 is present between the first side wall 392 and the second side wall 394 of the strut preform 306. As shown in FIG. 21, the strut preform 306 may be formed to generally be an airfoil shape structure 307 as was described above with regard to FIG. 6.

FIG. 22 is a cross-sectional view of the strut preform 306 of FIG. 21, taken at plane 22-22 of FIG. 21, according to an aspect of the present disclosure. As shown in FIG. 22, rather than having the hollow core portion 396, a filler material 398 may be provided so as to form a spar 400 of the strut 306. In addition, as shown in FIG. 22, one or more additional preform layers 402 may be added to the first side wall 392 of the strut preform 306, and one or more additional preform layers 404 may be added to the second side wall 394 of the strut preform 306. The additional preform layers 402 and the additional preform layers 404 may be either a three-dimensional fabric layer similar to that described above with regard to any of FIG. 2A, FIG. 2B, FIG. 2C, and FIG. 2D. Alternatively, the additional preform layers 402 and the additional preform layers 404 may each be two-dimensional fabric layers that are overlaid onto the first side wall 392 or onto the second side wall 394 of the strut preform 306. Further, the additional preform layers 402 and the additional preform layers 404 may be a continuous wrap layer that extends in the axial direction A around a leading edge 406 of the strut preform 306, along the first side wall 392 of the strut preform 306, around a trailing edge 408 of the strut preform 306, and along the second side wall 394 of the strut preform 306.

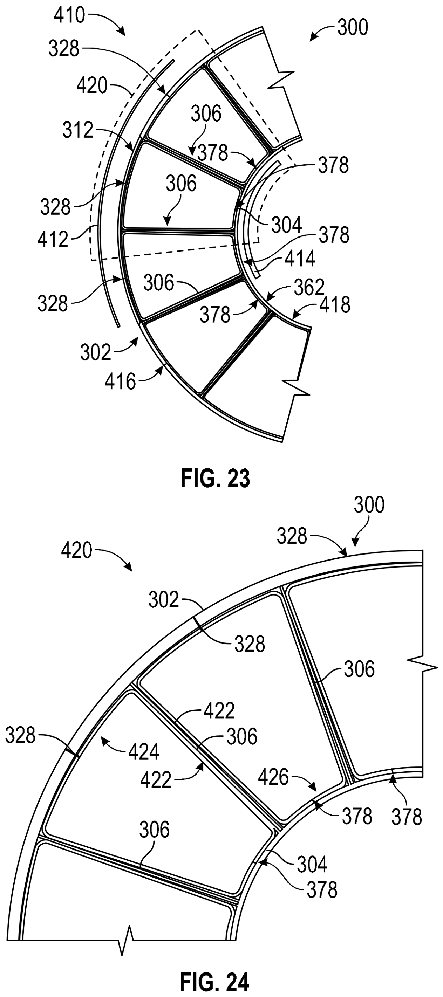

FIG. 23 is an enlarged view of a portion of the preform assembly 300 of FIG. 7, taken at detail view 410 of FIG. 7, according to an aspect of the present disclosure. In FIG. 23, one or more additional preform layers 412 may be added to an exterior side 416 of the outer shell hoop preform 302. The one or more additional preform layers 412 may be added to increase a thickness of the outer shell hoop preform 302, and may also be added to cross-over and to strengthen each of the outer shell frame preform connections 328. The additional preform layers 412 may be assembled to the preform assembly 300 either before, or after, being installed onto a mold tooling structure. The additional preform layers 412 may be either three-dimensional woven fabric preforms, or may be two-dimensional preforms or layers. Further, one or more additional preform layers 414 may be added to the inner hub hoop preform 304 by being layered onto an interior side 418 of the inner hub hoop preform 304. The one or more additional preform layers 414 may be added to increase a thickness of the inner hub hoop preform 304, and may also be added to cross-over and to strengthen each of the inner hub frame preform connections 378. The additional preform layers 414 may also be added to the inner hub hoop preform 304 either before, or after the inner hub hoop preform 304 is installed onto the mold tooling structure. The additional preform layers 414 may also be either three-dimensional woven fabric preforms, or two-dimensional preforms or layers.

FIG. 24 is an enlarged view of a portion of the preform assembly 300 of FIG. 23, taken at detail view 420 of FIG. 23, according to an aspect of the present disclosure. In FIG. 24, one or more additional vane preform layers 422 may be added to each of the strut preforms 306, in-between respective ones of the strut preforms 306 along an interior side 424 of the outer shell hoop preform 302, and along an exterior side 426 of the inner hub hoop preform 304. The additional vane preform layers 422 may be in the form of three-dimensional woven fabric layers, two-dimensional woven fabric layers, or a woven or a braided sock that may be added to thicken the bifurcated strut preforms 306 and also to build and to form the airfoil structure for each of the guide vanes 158 (FIG. 4).

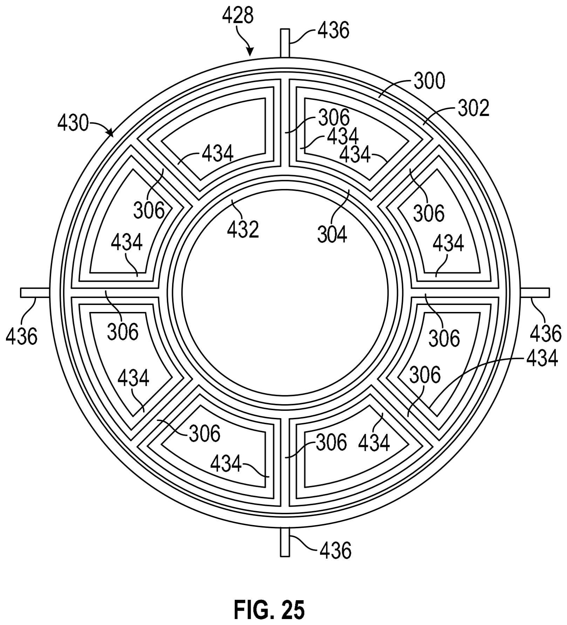

FIG. 25 is a schematic view of a mold tooling structure 428 that may be utilized in manufacturing the guide vane structure 161 of FIG. 4, according to an aspect of the present disclosure. The mold tooling structure 428 includes an outer shell mold portion 430 for forming the outer shell 165 (FIG. 4), an inner hub mold portion 432 for forming the inner hub 167 (FIG. 4), and a plurality of strut mold portions 434 for forming the guide vanes (struts) 158. The preform assembly 300 is formed and assembled as described above with regard to any of FIGS. 7 to 24, and the preform assembly 300 may be assembled utilizing the mold tooling structure 428. For example, the outer shell hoop preform 302 may be assembled onto the outer shell mold portion 430, and the inner hub hoop preform 304 may be assembled onto the inner hub mold portion 432, and then each of the strut preforms 306 may be assembled via the strut mold portions 434. The mold tooling structure 428 also includes one or more injectors 436 through which a matrix material (as described above) may then be injected into the mold tooling structure 428 to generate an impregnated preform assembly within the mold tooling structure 428. A curing process may then be applied to the impregnated preform assembly within the mold tooling structure 428. For example, the mold tooling structure 428 may include the ability to apply pressure and heat to the impregnated preform assembly to apply the curing process, or the mold tooling structure 428 may be provided to an autoclave to institute a curing process. The cured composite component can then be removed from the mold tooling structure 428 for additional machining or other processing to complete the manufacturing process of the composite component.

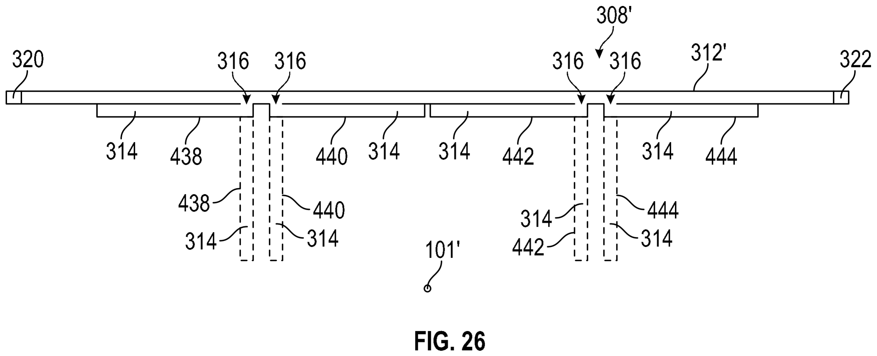

FIG. 26 is a schematic, aft looking view of an alternate outer shell preform portion 308' to that shown in FIG. 8 that may be implemented in the preform assembly 300 of FIG. 7, according to another aspect of the present disclosure. One difference between the alternate outer shell preform portion 308' and the outer shell preform portion 308 of FIG. 8 is that additional bifurcated strut preforms 314 are included with an alternate outer shell frame portion 312'. The alternate outer shell frame portion 312' may be similar to the outer shell frame portion 312 of the FIG. 8 aspect, and includes the first outer shell frame connection end 320 and the second outer shell frame connection end 322. The alternate outer shell preform portion 308' includes a first bifurcated outer shell strut portion 438, a second bifurcated outer shell strut portion 440, a third bifurcated outer shell strut portion 442, and a fourth bifurcated outer shell strut portion 444. As with the FIG. 8 aspect, in the FIG. 26 aspect, each of the plurality of bifurcated outer shell strut portions 314 are arranged to extend inward (with respect to the vane structure centerline axis 101').

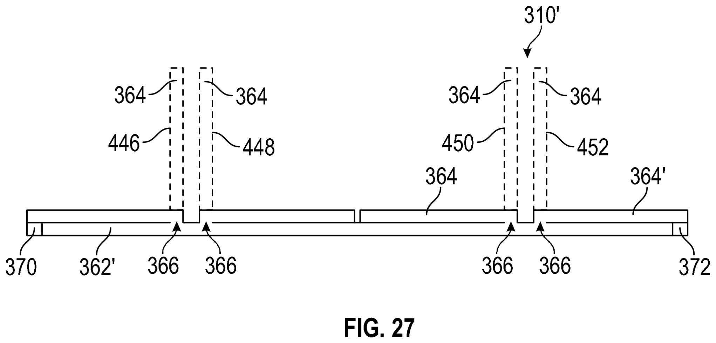

FIG. 27 is a schematic, aft looking view of an alternate inner hub preform portion 310' to that shown in FIG. 15 that may be implemented in the preform assembly 300 of FIG. 7, according to another aspect of the present disclosure. One difference between the alternate inner hub preform portion 310' and the inner hub preform portion 310 of FIG. 15 is that additional bifurcated inner hub strut preforms 364 are included with an alternate inner hub frame portion 362'. The alternate inner hub frame portion 362' may be similar to the inner hub frame portion 362 of the FIG. 15 aspect, and includes the first inner hub frame connection end 370 and the second inner hub frame connection end 372. The alternate inner hub preform portion 310' includes a first bifurcated inner hub strut portion 446, a second bifurcated inner hub strut portion 448, a third bifurcated inner hub strut portion 450, and a fourth bifurcated inner hub strut portion 452. As with the FIG. 15 aspect, in the FIG. 27 aspect, each of the plurality of bifurcated inner hub strut portions 364 are arranged to extend outward (with respect to the vane structure centerline axis 101').

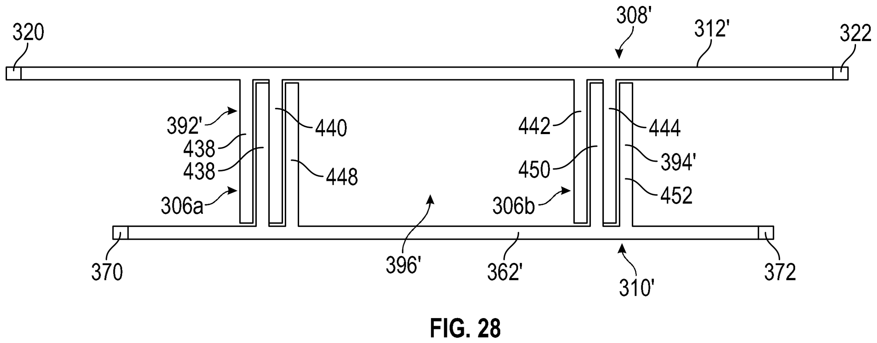

FIG. 28 is a schematic, aft looking view of the alternate outer shell preform portion 308' of FIG. 26 and the alternate inner hub preform portion 310' of FIG. 27 as arranged for forming the strut preform 306 of FIG. 7, according to an aspect of the present disclosure. The FIG. 28 aspect is similar to the FIG. 20 aspect. However, in the FIG. 28 aspect, the first bifurcated outer shell strut portion 438, the first bifurcated inner hub strut portion 446, the second bifurcated outer shell strut portion 440, and the second bifurcated inner hub strut portion 448 are all arranged adjacent to one another so as to be joined together and to define a first strut preform portion 306a forms a first side wall 392' of the strut preform 306. Similarly, the third bifurcated outer shell strut portion 442, the third bifurcated inner hub strut portion 450, the fourth bifurcated outer shell strut portion 444, and the fourth bifurcated inner hub strut portion 452 are all arranged adjacent to one another so as to be joined together and to define a second strut preform portion 306b that forms a second side wall 394' of the strut preform 306. A hollow core portion 396' may be included between the first side wall 392' and the second side wall 394'. Alternatively, a filler material similar to the filler material 398 of FIG. 22 may be included between the first side wall 392' and the second side wall 394'. Thus, the FIG. 28 aspect provides for a double thickness wall for the each of the first side wall 392' and the second side wall 394' of the strut preform 306, as compared to the FIG. 20 aspect.

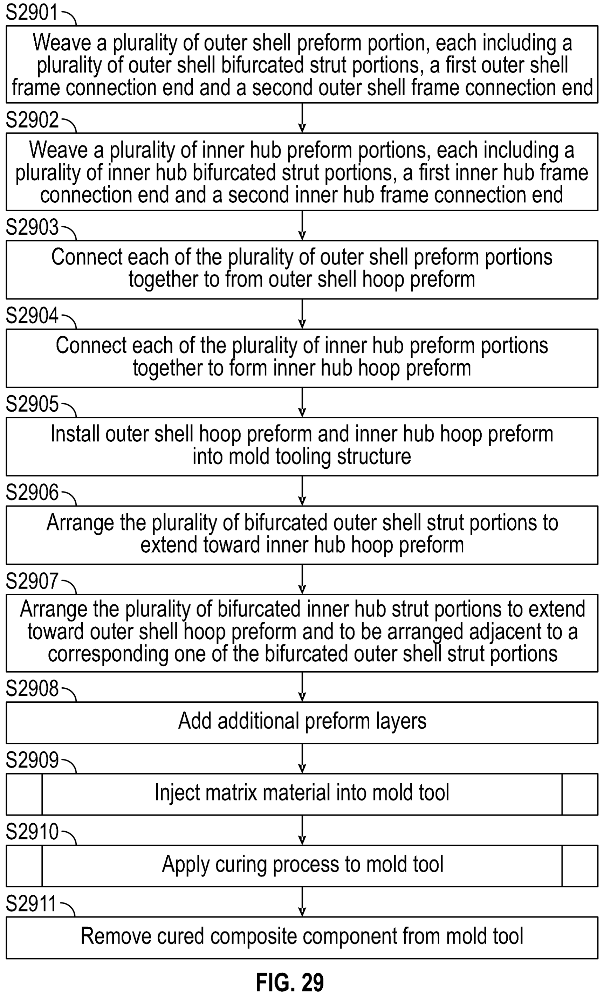

FIG. 29 is a flowchart of process steps for a method of manufacturing a composite component, according to an aspect of the present disclosure. In step S2901, the plurality of outer shell preform portions 308 are woven. For example, a plurality of the outer shell preform portions 308 of FIG. 8 are woven with any of the three-dimensional woven fabric configurations as shown in FIG. 2A, FIG. 2B, FIG. 2C, or FIG. 2D. As was described above with regard to FIG. 8, each of the outer shell preform portions 308 is woven to include the outer shell frame portion 312 having the first outer shell frame connection end 320 and the second outer shell frame connection end 322, and to include the bifurcated outer shell strut portions 314 that are integrally woven with the outer shell frame portion 312 at the frame-strut joint portion 316, and, thereafter, are bifurcated from the outer shell frame portion 312.

In step S2902, the plurality of inner hub preform portions 310 are woven. For example, a plurality of the inner hub preform portions 310 of FIG. 15 are woven with any of the three-dimensional woven fabric configurations as shown in FIG. 2A, FIG. 2B, FIG. 2C, or FIG. 2D. As was described above with regard to FIG. 15, each of the inner hub preform portions 310 is woven to include the inner hub frame portion 362 having the first inner hub frame connection end 370 and the second inner hub frame connection end 372, and to include the bifurcated inner hub strut portions 364 that are integrally woven with the inner hub frame portion 362 at the frame-strut joint portion 366, and, thereafter, are bifurcated from the inner hub frame portion 362.

In step S2903, each of the plurality of outer shell preform portions 308 is connected together to form the outer shell hoop preform 302. For example, as was described above with regard to FIG. 11 to FIG. 14, for each respective one of the plurality of outer shell preform portions 308 (e.g., for the first outer shell preform portion 308a of FIG. 7), the first outer shell frame connection end 320 is connected with the second outer shell frame connection end 322 of an adjacently connected outer shell preform portion 308 (e.g., the first outer shell preform portion 308a is connected with the second outer shell preform portion 308b of FIG. 7), and the second outer shell frame connection end 322 is connected with the first outer shell frame connection end 320 of another adjacently connected outer shell preform portion 308 (e.g., the first outer shell preform portion 308a is connected with the third outer shell preform portion 308c of FIG. 7). Thus, each of the plurality of outer shell preform portions 308 is connected together to form the outer shell hoop preform 302 of FIG. 7.

In step S2904, each of the plurality of inner hub preform portions 310 is connected together to form the inner hub hoop preform 304. For example, as was described above with regard to FIG. 18 and FIG. 19, for each respective one of the plurality of inner hub preform portions 310 (e.g., for the first inner hub preform portion 310a of FIG. 7), the first inner hub frame connection end 370 is connected with the second inner hub frame connection end 372 of an adjacently connected inner hub preform portion 310 (e.g., the first inner hub preform portion 310a is connected with the second inner hub preform portion 310b of FIG. 7), and the second inner hub frame connection end 372 is connected with the first inner hub frame connection end 370 of another adjacently connected inner hub preform portion 310 (e.g., the first inner hub preform portion 310a is connected with the third inner hub preform portion 310c of FIG. 7). Thus, each of the plurality of inner hub preform portions 310 are connected together to form the inner hub hoop preform 304 of FIG. 7.

In step S2905, the outer shell hoop preform 302, as assembled in step S2903, is installed into the mold tooling structure 428 (FIG. 25), and the inner hub hoop preform 304, as assembled in step S2904, is installed into the mold tooling structure 428. While FIG. 29 includes step S2905 to install the outer shell hoop preform 302 into the mold tooling structure 428 after the plurality of outer shell hoop preforms 308 are connected together, the process of step S2903 and the process of step S2904 may be performed using the mold tooling structure 428 instead. For example, each of the plurality of outer shell preform portions 308 may be installed in the mold tooling structure 428 during the processing of step S2903 to connect the plurality of outer shell preform portions 308 together in the mold tooling structure 428 to form the outer shell hoop preform 302 in the mold tooling structure 428. A similar process can be performed for step S2904 to connect the plurality of inner hub preform portions 310 together within the mold tooling structure 428. When the processing is performed in this manner, step S2905 may be omitted.

In step S2906, once the outer shell hoop preform 302 and the inner hub hoop preform 304 are arranged within the mold tooling structure 428, the plurality of bifurcated outer shell strut portions 314 are arranged to be extended inward from the outer shell preform portion 308 toward the inner hub preform portion 310. For example, as shown in FIG. 20, each of the plurality of bifurcated outer shell strut portions 314 is extended toward to the inner hub preform portion 310. In step S2907, the plurality of bifurcated inner hub strut portions 364 are arranged to extend outward from the inner hub preform portion 310 toward the outer shell preform portion 308, and are arranged to be adjacent to a corresponding one of the bifurcated outer shell strut portions 314. For example, as shown in FIG. 20, the first bifurcated inner hub strut portion 388 is extended outward (with respect to the vane structure centerline axis 101') toward the outer shell preform portion 308 and be arranged adjacent to the first bifurcated outer shell strut portion 384. Similarly, the second bifurcated inner hub strut portion 390 is extended outward and is arranged to be adjacent to the second bifurcated outer shell strut portion 386. As was described above with regard to FIG. 20, the first bifurcated outer shell strut portion 384 and the first bifurcated inner hub strut portion 388 form the first side wall 392 of the strut 306, and the second bifurcated outer shell strut portion 386 and the second bifurcated inner hub strut portion 390 form the second side wall 394 of the strut 306.

Next, in step S2908, as shown in FIG. 22 to FIG. 24, the additional preform layers 402, the additional preform layers 404, the additional preform layers 412, the additional preform layers 414, or the additional preform layers 422 can be overlayed onto the preform assembly 300 so as to build-up the preform structure for the composite component part being formed. In step S2909, a process to inject a matrix material into the mold tooling structure 428 (FIG. 25) via the injectors 436 is performed. The matrix material may be any of those described herein. Any one or more of various known processes of injecting matrix materials into a mold for forming a composite component can be implemented. Then, in step S2910, a curing process is applied to the mold tooling structure 428 as described with regard to FIG. 25. Finally, in step S2911, once the curing process has been completed, the cured composite component part can be removed from the mold tooling structure 548, and any additional manufacturing processes that may be needed to complete the composite component part (i.e., to complete the guide vane structure 161 of FIG. 4) can be performed.

The foregoing aspects provide a technique for manufacturing a vane structure as a composite component for use in a gas turbine engine. The process of weaving a three-dimensional fabric preform for the outer shell preforms with bifurcated strut portions simplifies the connections of the struts with the outer shell hoop preform and with the inner hub hoop preform. The simplified strut connection arrangement can then be built-up for additional strength or stiffness by adding additional preform layers around the strut-frame joint.

A method of manufacturing a composite component for a gas turbine engine, the composite component including an outer shell, an inner hub, and a plurality of struts connecting the outer shell and the inner hub, the method including weaving a plurality of outer shell preform portions, each of the plurality of outer shell preform portions including (i) an outer shell frame portion, and (ii) a plurality of bifurcated outer shell strut portions bifurcated from the outer shell frame portion, weaving a plurality of inner hub preform portions, each of the plurality of inner hub preform portions including (i) an inner hub frame portion, and (ii) a plurality of bifurcated inner hub strut portions bifurcated from the inner hub frame portion, connecting each of the plurality of outer shell preform portions together via a plurality of outer shell frame preform connections to form an outer shell hoop preform, connecting each of the plurality of inner hub preform portions together via a plurality of inner hub frame preform connections to form an inner hub hoop preform, installing the outer shell hoop preform and the inner hub hoop preform onto a mold tooling structure, arranging each of the plurality of bifurcated outer shell strut portions to extend toward the inner hub hoop preform, and each of the plurality of bifurcated inner hub strut portions to extend toward the outer shell hoop preform and to be arranged adjacent to a respective one of the plurality of bifurcated outer shell strut portions, a strut preform portion being defined by at least one of the plurality of bifurcated outer shell strut portions and at least one of the plurality of bifurcated inner hub strut portions being arranged adjacent to one another to be joined together, injecting a matrix material into the mold tooling structure, and applying a curing process to the mold tooling structure to obtain a molded composite component.

The method according to the preceding clause, wherein (a) each outer shell frame portion has a first outer shell frame connection end and a second outer shell frame connection end opposite the first outer shell frame connection end, (b) each inner hub frame portion has a first inner hub frame connection end and a second inner hub frame connection end opposite the first inner hub frame connection end, (c) for respective ones of the plurality of outer shell preform portions, the first outer shell frame connection end is connected with the second outer shell frame connection end of an adjacently connected outer shell preform portion, and the second outer shell frame connection end is connected with the first outer shell frame connection end of another adjacently connected outer shell preform portion, and (d) for respective ones of the plurality of inner hub preform portions, the first inner hub frame connection end is connected with the second inner hub frame connection end of an adjacently connected inner hub preform portion, and the second inner hub frame connection end is connected with the first inner hub frame connection end of another adjacently connected inner hub preform portion.

The method according to any preceding clause, wherein the composite component being one of an outlet guide vane structure, an inlet guide vane structure, or a stator vane structure.

The method according to any preceding clause, further including adding at least one additional preform layer to the strut preform portion to form an airfoil shape structure.

The method according to any preceding clause, wherein the first outer shell frame connection end comprising a plurality of first end bifurcated layers, and the second outer shell frame connection end comprises a plurality of second end bifurcated layers.

The method according to any preceding clause, wherein, in the connecting each of the plurality of outer shell preform portions together to form the outer shell hoop preform, for respective ones of the plurality of outer shell preform portions, the plurality of first end bifurcated layers being connected in an overlapping manner with the plurality of second end bifurcated layers of the adjacently connected outer shell preform portion, and the plurality of second end bifurcated layers are connected in an overlapping manner with the plurality of first end bifurcated layers of the another adjacently connected outer shell preform portion.

The method according to any preceding clause, wherein the first inner hub frame connection end comprising a plurality of first end bifurcated layers, and the second inner hub frame connection end comprises a plurality of second end bifurcated layers.

The method according to any preceding clause, wherein, in the connecting each of the plurality of inner hub preform portions together to form the inner hub hoop preform, for respective ones of the plurality of inner hub preform portions, the plurality of first end bifurcated layers being connected in an overlapping manner with the plurality of second end bifurcated layers of the adjacently connected inner hub preform portion, and the plurality of second end bifurcated layers are connected in an overlapping manner with the plurality of first end bifurcated layers of the another adjacently connected inner hub preform portion.

The method according to any preceding clause, further including adding at least one additional preform layer to at least one of the outer shell hoop preform to increase a thickness of the outer shell hoop preform, or to the inner hub hoop preform to increase a thickness of the inner hub hoop preform.

The method according to any preceding clause, wherein the at least one additional preform layer being added to at least one of an exterior side of the outer shell hoop preform, or to an interior side of the inner hub hoop preform.

The method according to any preceding clause, wherein the first outer shell frame connection end comprising a first end outer shell scarf joint connecting portion, and the second outer shell frame connection end comprises a second end outer shell scarf joint connecting portion.

The method according to any preceding clause, wherein, in the connecting each of the plurality of outer shell preform portions together to form the outer shell hoop preform, for respective ones of the plurality of outer shell preform portions, the first end outer shell scarf joint connecting portion being connected with the second end outer shell scarf joint connecting portion of the adjacently connected outer shell preform portion, and the second end outer shell scarf joint connecting portion is connected with the first end outer shell scarf joint connecting portion of the another adjacently connected outer shell preform portion.

The method according to any preceding clause, further including adding at least one additional preform layer to at least one of the plurality of outer shell frame preform connections, or to at least one of the plurality of inner hub frame preform connections.

The method according to any preceding clause, wherein the at least one additional preform layer being an axial wrap around the at least one of the plurality of outer shell frame preform connections, or an axial wrap around the least one of the inner hub frame preform connections.

The method according to any preceding clause, wherein each of the plurality of outer shell preform portions including a first bifurcated outer shell strut portion, a second bifurcated outer shell strut portion, a third bifurcated outer shell strut portion, and a fourth bifurcated outer shell strut portion, and each of the plurality of inner hub preform portions includes a first bifurcated inner hub strut portion, a second bifurcated inner hub strut portion, a third bifurcated inner hub strut portion, and a fourth bifurcated inner hub strut portion.

The method according to any preceding clause, wherein, in the arranging, the first bifurcated outers shell strut portion, the first bifurcated inner hub strut portion, the second bifurcated outer shell strut portion, and the second bifurcated inner hub strut portion being arranged adjacent to one another to define a first strut preform portion, and the third bifurcated outer shell strut portion, the third bifurcated inner hub strut portion, the fourth bifurcated outer shell strut portion, and the fourth bifurcated inner hub strut portion are arranged adjacent to one another to define a second strut preform portion.

The method according to any preceding clause, wherein the first strut preform portion defining a first side wall of a strut and the second strut preform portion defines a second side wall of the strut.

The method according to any preceding clause, wherein each of the plurality of outer shell preform portions including a first bifurcated outer shell strut portion and a second bifurcated outer shell strut portion, and each of the plurality of inner hub preform portions includes a first bifurcated inner hub strut portion and a second bifurcated inner hub strut portion.

The method according to any preceding clause, wherein, in the arranging, the first bifurcated outer shell strut portion and the first bifurcated inner hub strut portion being arranged adjacent to one another to define a first strut preform portion, and the second bifurcated outer shell strut portion and the second bifurcated inner hub strut portion are arranged adjacent to one another to define a second strut preform portion.

The method according to any preceding clause, wherein the first strut preform portion forming a first side wall of a strut and the second strut preform portion forms a second side wall of the strut.

The method according to any preceding clause, further including inserting a filler material between the first strut preform portion and the second strut preform portion to define a spar of the strut.

A composite component for a gas turbine engine, the composite component including an outer shell, an inner hub, and a plurality of struts connecting the outer shell and the inner hub, the composite component being manufactured by weaving a plurality of outer shell preform portions, each of the plurality of outer shell preform portions including (i) an outer shell frame portion, and (ii) a plurality of bifurcated outer shell strut portions bifurcated from the outer shell frame portion, weaving a plurality of inner hub preform portions, each of the plurality of inner hub preform portions including (i) an inner hub frame portion, and (ii) a plurality of bifurcated inner hub strut portions bifurcated from the inner hub frame portion, connecting each of the plurality of outer shell preform portions together via a plurality of outer shell frame preform connections to form an outer shell hoop preform, connecting each of the plurality of inner hub preform portions together via a plurality of inner hub frame preform connections to form an inner hub hoop preform, installing the outer shell hoop preform and the inner hub hoop preform onto a mold tooling structure, arranging each of the plurality of bifurcated outer shell strut portions to extend toward the inner hub hoop preform, and each of the plurality of bifurcated inner hub strut portions to extend toward the outer shell hoop preform and to be arranged adjacent to a respective one of the plurality of bifurcated outer shell strut portions, a strut preform portion being defined by at least one of the plurality of bifurcated outer shell strut portions and at least one of the plurality of bifurcated inner hub strut portions being arranged adjacent to one another to be joined together, injecting a matrix material into the mold tooling structure, and applying a curing process to the mold tooling structure to obtain a molded composite component.

The composite component according to the preceding clause, wherein (a) each outer shell frame portion has a first outer shell frame connection end and a second outer shell frame connection end opposite the first outer shell frame connection end, (b) each inner hub frame portion has a first inner hub frame connection end and a second inner hub frame connection end opposite the first inner hub frame connection end, (c) for respective ones of the plurality of outer shell preform portions, the first outer shell frame connection end is connected with the second outer shell frame connection end of an adjacently connected outer shell preform portion, and the second outer shell frame connection end is connected with the first outer shell frame connection end of another adjacently connected outer shell preform portion, and (d) for respective ones of the plurality of inner hub preform portions, the first inner hub frame connection end is connected with the second inner hub frame connection end of an adjacently connected inner hub preform portion, and the second inner hub frame connection end is connected with the first inner hub frame connection end of another adjacently connected inner hub preform portion.

The composite component according to any preceding clause, wherein the composite component being one of an outlet guide vane structure, an inlet guide vane structure, or a stator vane structure.

The composite component according to any preceding clause, further including adding at least one additional preform layer to the strut preform portion to form an airfoil shape structure.

The composite component according to any preceding clause, wherein the first outer shell frame connection end comprising a plurality of first end bifurcated layers, and the second outer shell frame connection end comprises a plurality of second end bifurcated layers.

The composite component according to any preceding clause, wherein, in the connecting each of the plurality of outer shell preform portions together to form the outer shell hoop preform, for respective ones of the plurality of outer shell preform portions, the plurality of first end bifurcated layers being connected in an overlapping manner with the plurality of second end bifurcated layers of the adjacently connected outer shell preform portion, and the plurality of second end bifurcated layers are connected in an overlapping manner with the plurality of first end bifurcated layers of the another adjacently connected outer shell preform portion.

The composite component according to any preceding clause, wherein the first inner hub frame connection end comprising a plurality of first end bifurcated layers, and the second inner hub frame connection end comprises a plurality of second end bifurcated layers.

The composite component according to any preceding clause, wherein, in the connecting each of the plurality of inner hub preform portions together to form the inner hub hoop preform, for respective ones of the plurality of inner hub preform portions, the plurality of first end bifurcated layers being connected in an overlapping manner with the plurality of second end bifurcated layers of the adjacently connected inner hub preform portion, and the plurality of second end bifurcated layers are connected in an overlapping manner with the plurality of first end bifurcated layers of the another adjacently connected inner hub preform portion.

The composite component according to any preceding clause, further including adding at least one additional preform layer to at least one of the outer shell hoop preform to increase a thickness of the outer shell hoop preform, or to the inner hub hoop preform to increase a thickness of the inner hub hoop preform.

The composite component according to any preceding clause, wherein the at least one additional preform layer being added to at least one of an exterior side of the outer shell hoop preform, or to an interior side of the inner hub hoop preform.

The composite component according to any preceding clause, wherein the first outer shell frame connection end comprising a first end outer shell scarf joint connecting portion, and the second outer shell frame connection end comprises a second end outer shell scarf joint connecting portion.

The composite component according to any preceding clause, wherein, in the connecting each of the plurality of outer shell preform portions together to form the outer shell hoop preform, for respective ones of the plurality of outer shell preform portions, the first end outer shell scarf joint connecting portion being connected with the second end outer shell scarf joint connecting portion of the adjacently connected outer shell preform portion, and the second end outer shell scarf joint connecting portion is connected with the first end outer shell scarf joint connecting portion of the another adjacently connected outer shell preform portion.

The composite component according to any preceding clause, further including adding at least one additional preform layer to at least one of the plurality of outer shell frame preform connections, or to at least one of the plurality of inner hub frame preform connections.

The composite component according to any preceding clause, wherein the at least one additional preform layer being an axial wrap around the at least one of the plurality of outer shell frame preform connections, or an axial wrap around the least one of the inner hub frame preform connections.

The composite component according to any preceding clause, wherein each of the plurality of outer shell preform portions including a first bifurcated outer shell strut portion, a second bifurcated outer shell strut portion, a third bifurcated outer shell strut portion, and a fourth bifurcated outer shell strut portion, and each of the plurality of inner hub preform portions includes a first bifurcated inner hub strut portion, a second bifurcated inner hub strut portion, a third bifurcated inner hub strut portion, and a fourth bifurcated inner hub strut portion.

The composite component according to any preceding clause, wherein, in the arranging, the first bifurcated outers shell strut portion, the first bifurcated inner hub strut portion, the second bifurcated outer shell strut portion, and the second bifurcated inner hub strut portion being arranged adjacent to one another to define a first strut preform portion, and the third bifurcated outer shell strut portion, the third bifurcated inner hub strut portion, the fourth bifurcated outer shell strut portion, and the fourth bifurcated inner hub strut portion are arranged adjacent to one another to define a second strut preform portion.

The composite component according to any preceding clause, wherein the first strut preform portion defining a first side wall of a strut and the second strut preform portion defines a second side wall of the strut.

The composite component according to any preceding clause, wherein each of the plurality of outer shell preform portions including a first bifurcated outer shell strut portion and a second bifurcated outer shell strut portion, and each of the plurality of inner hub preform portions includes a first bifurcated inner hub strut portion and a second bifurcated inner hub strut portion.

The composite component according to any preceding clause, wherein, in the arranging, the first bifurcated outer shell strut portion and the first bifurcated inner hub strut portion being arranged adjacent to one another to define a first strut preform portion, and the second bifurcated outer shell strut portion and the second bifurcated inner hub strut portion are arranged adjacent to one another to define a second strut preform portion.

The composite component according to any preceding clause, wherein the first strut preform portion forming a first side wall of a strut and the second strut preform portion forms a second side wall of the strut.

The composite component according to any preceding clause, further including inserting a filler material between the first strut preform portion and the second strut preform portion to define a spar of the strut.

A method of manufacturing a composite component for a gas turbine engine, the composite component including an outer shell, an inner hub, and a plurality of struts connecting the outer shell and the inner hub, the method comprising: weaving a plurality of outer shell preform portions, each of the plurality of outer shell preform portions including (i) an outer shell frame portion having a first outer shell frame connection end and a second outer shell frame connection end opposite the first outer shell frame connection end, and (ii) a plurality of bifurcated outer shell strut portions bifurcated from the outer shell frame portion; weaving a plurality of inner hub preform portions, each of the plurality of inner hub preform portions including (i) an inner hub frame portion having a first inner hub frame connection end and a second inner hub frame connection end opposite the first inner hub frame connection end, and (ii) a plurality of bifurcated inner hub strut portions bifurcated from the inner hub frame portion; connecting each of the plurality of outer shell preform portions together via a plurality of outer shell frame preform connections to form an outer shell hoop preform, wherein, for respective ones of the plurality of outer shell preform portions, the first outer shell frame connection end is connected with the second outer shell frame connection end of an adjacently connected outer shell preform portion, and the second outer shell frame connection end is connected with the first outer shell frame connection end of another adjacently connected outer shell preform portion; connecting each of the plurality of inner hub preform portions together via a plurality of inner hub frame preform connections to form an inner hub hoop preform, wherein, for respective ones of the plurality of inner hub preform portions, the first inner hub frame connection end is connected with the second inner hub frame connection end of an adjacently connected inner hub preform portion, and the second inner hub frame connection end is connected with the first inner hub frame connection end of another adjacently connected inner hub preform portion; installing the outer shell hoop preform and the inner hub hoop preform onto a mold tooling structure; arranging each of the plurality of bifurcated outer shell strut portions to extend toward the inner hub hoop preform, and arranging each of the plurality of bifurcated inner hub strut portions to extend toward the outer shell hoop preform and to be arranged adjacent to a respective one of the plurality of bifurcated outer shell strut portions, a strut preform portion being defined by at least one of the plurality of bifurcated outer shell strut portions and at least one of the plurality of bifurcated inner hub strut portions being arranged adjacent to one another to be joined together; injecting a matrix material into the mold tooling structure; and applying a curing process to the mold tooling structure to obtain a molded composite component.

The method according to any preceding clause, wherein the composite component is one of an outlet guide vane structure, an inlet guide vane structure, or a stator vane structure.

The method according to any preceding clause, further comprising adding at least one additional preform layer to the strut preform portion to form an airfoil shape structure.

The method according to any preceding clause, wherein the first outer shell frame connection end comprises a plurality of first end bifurcated layers, and the second outer shell frame connection end comprises a plurality of second end bifurcated layers.

The method according to any preceding clause, wherein, in the connecting each of the plurality of outer shell preform portions together to form the outer shell hoop preform, for respective ones of the plurality of outer shell preform portions, the plurality of first end bifurcated layers are connected in an overlapping manner with the plurality of second end bifurcated layers of the adjacently connected outer shell preform portion, and the plurality of second end bifurcated layers are connected in an overlapping manner with the plurality of first end bifurcated layers of the another adjacently connected outer shell preform portion.

The method according to any preceding clause, wherein the first inner hub frame connection end comprises a plurality of first end bifurcated layers, and the second inner hub frame connection end comprises a plurality of second end bifurcated layers.

The method according to any preceding clause, wherein, in the connecting each of the plurality of inner hub preform portions together to form the inner hub hoop preform, for respective ones of the plurality of inner hub preform portions, the plurality of first end bifurcated layers are connected in an overlapping manner with the plurality of second end bifurcated layers of the adjacently connected inner hub preform portion, and the plurality of second end bifurcated layers are connected in an overlapping manner with the plurality of first end bifurcated layers of the another adjacently connected inner hub preform portion.

The method according to any preceding clause, further comprising adding at least one additional preform layer to at least one of the outer shell hoop preform to increase a thickness of the outer shell hoop preform, or to the inner hub hoop preform to increase a thickness of the inner hub hoop preform.

The method according to any preceding clause, wherein the at least one additional preform layer is added to at least one of an exterior side of the outer shell hoop preform, or to an interior side of the inner hub hoop preform.

The method according to any preceding clause, wherein the first outer shell frame connection end comprises a first end outer shell scarf joint connecting portion, and the second outer shell frame connection end comprises a second end outer shell scarf joint connecting portion.

The method according to any preceding clause, wherein, in the connecting each of the plurality of outer shell preform portions together to form the outer shell hoop preform, for respective ones of the plurality of outer shell preform portions, the first end outer shell scarf joint connecting portion is connected with the second end outer shell scarf joint connecting portion of the adjacently connected outer shell preform portion, and the second end outer shell scarf joint connecting portion is connected with the first end outer shell scarf joint connecting portion of the another adjacently connected outer shell preform portion.

The method according to any preceding clause, further comprising adding at least one additional preform layer to at least one of the plurality of outer shell frame preform connections, or to at least one of the plurality of inner hub frame preform connections.

The method according to any preceding clause, wherein the at least one additional preform layer is an axial wrap around the at least one of the plurality of outer shell frame preform connections, or an axial wrap around the least one of the inner hub frame preform connections.

The method according to any preceding clause, wherein each of the plurality of outer shell preform portions includes a first bifurcated outer shell strut portion, a second bifurcated outer shell strut portion, a third bifurcated outer shell strut portion, and a fourth bifurcated outer shell strut portion, and each of the plurality of inner hub preform portions includes a first bifurcated inner hub strut portion, a second bifurcated inner hub strut portion, a third bifurcated inner hub strut portion, and a fourth bifurcated inner hub strut portion.

The method according to any preceding clause, wherein, in the arranging, the first bifurcated outers shell strut portion, the first bifurcated inner hub strut portion, the second bifurcated outer shell strut portion, and the second bifurcated inner hub strut portion are arranged adjacent to one another to define a first strut preform portion, and the third bifurcated outer shell strut portion, the third bifurcated inner hub strut portion, the fourth bifurcated outer shell strut portion, and the fourth bifurcated inner hub strut portion are arranged adjacent to one another to define a second strut preform portion.

The method according to any preceding clause, wherein the first strut preform portion defines a first side wall of a strut and the second strut preform portion defines a second side wall of the strut.

The method according to any preceding clause, wherein each of the plurality of outer shell preform portions includes a first bifurcated outer shell strut portion and a second bifurcated outer shell strut portion, and each of the plurality of inner hub preform portions includes a first bifurcated inner hub strut portion and a second bifurcated inner hub strut portion.

The method according to any preceding clause, wherein, in the arranging, the first bifurcated outer shell strut portion and the first bifurcated inner hub strut portion are arranged adjacent to one another to define a first strut preform portion, and the second bifurcated outer shell strut portion and the second bifurcated inner hub strut portion are arranged adjacent to one another to define a second strut preform portion.

The method according to any preceding clause, wherein the first strut preform portion forms a first side wall of a strut and the second strut preform portion forms a second side wall of the strut.

The method according to any preceding clause, further comprising inserting a filler material between the first strut preform portion and the second strut preform portion to define a spar of the strut.

Although the foregoing description is directed to the preferred embodiments, other variations and modifications will be apparent to those skilled in the art, and may be made without departing from the present disclosure. Moreover, features described in connection with one embodiment may be used in conjunction with other embodiments, even if not explicitly stated above.

## Claims

1. A method of manufacturing a composite component (161') for a gas turbine engine, the composite component (161') including an outer shell (165), an inner hub (167), and a plurality of struts (158) connecting the outer shell (165) and the inner hub (167), the method comprising:
weaving (S2901) a plurality of outer shell preform portions (308), each of the plurality of outer shell preform portions (308) including (i) an outer shell frame portion (312), and (ii) a plurality of bifurcated outer shell strut portions (314) bifurcated from the outer shell frame portion (312);
weaving (S2902) a plurality of inner hub preform portions (310), each of the plurality of inner hub preform portions (310) including (i) an inner hub frame portion (362), and (ii) a plurality of bifurcated inner hub strut portions (364) bifurcated from the inner hub frame portion (362);
connecting (S2903) each of the plurality of outer shell preform portions (308) together via a plurality of outer shell frame preform connections (328, 328a, 328b) to form an outer shell hoop preform (302);
connecting (S2904) each of the plurality of inner hub preform portions (310) together via a plurality of inner hub frame preform connections (378) to form an inner hub hoop preform (304);
installing (S2905) the outer shell hoop preform (302) and the inner hub hoop preform (304) onto a mold tooling structure (428);
arranging (S2906) each of the plurality of bifurcated outer shell strut portions (314) to extend toward the inner hub hoop preform (304), and arranging (S2907) each of the plurality of bifurcated inner hub strut portions (364) to extend toward the outer shell hoop preform (302) and to be arranged adjacent to a respective one of the plurality of bifurcated outer shell strut portions (314), a strut preform portion (306) being defined by at least one of the plurality of bifurcated outer shell strut portions (314) and at least one of the plurality of bifurcated inner hub strut portions (364) being arranged adjacent to one another to be joined together;
injecting (S2909) a matrix material into the mold tooling structure (428); and
applying (S2910) a curing process to the mold tooling structure (428) to obtain a molded composite component (161').

2. The method according to claim 1, wherein (a) each outer shell frame portion (312) has a first outer shell frame connection end (320) and a second outer shell frame connection end (322) opposite the first outer shell frame connection end (320), (b) each inner hub frame portion (362) has a first inner hub frame connection end (370) and a second inner hub frame connection end (372) opposite the first inner hub frame connection end (370), (c) for respective ones of the plurality of outer shell preform portions (308), the first outer shell frame connection end (320) is connected with the second outer shell frame connection end (322) of an adjacently connected outer shell preform portion (308), and the second outer shell frame connection end (322) is connected with the first outer shell frame connection end (320) of another adjacently connected outer shell preform portion (308), and (d) for respective ones of the plurality of inner hub preform portions (310), the first inner hub frame connection end (370) is connected with the second inner hub frame connection end (372) of an adjacently connected inner hub preform portion (310), and the second inner hub frame connection end (372) is connected with the first inner hub frame connection end (370) of another adjacently connected inner hub preform portion (310).

3. The method according to any preceding claim, further comprising adding (S2908) at least one additional preform layer (402, 404) to the strut preform portion (306) to form an airfoil shape structure (307).

4. The method according to claim 2, wherein the first outer shell frame connection end (320) comprises a plurality of first end bifurcated layers (324), and the second outer shell frame connection end (322) comprises a plurality of second end bifurcated layers (326), and alternatively,
wherein, in the connecting (S2903) each of the plurality of outer shell preform portions (308) together to form the outer shell hoop preform (302), for respective ones of the plurality of outer shell preform portions (308), the plurality of first end bifurcated layers (324) are connected in an overlapping manner with the plurality of second end bifurcated layers (326) of the adjacently connected outer shell preform portion (308), and the plurality of second end bifurcated layers (326) are connected in an overlapping manner with the plurality of first end bifurcated layers (324) of the another adjacently connected outer shell preform portion (308).

5. The method according to claim 2, wherein the first inner hub frame connection end (370) comprises a plurality of first end bifurcated layers (374), and the second inner hub frame connection end (372) comprises a plurality of second end bifurcated layers (376), and alternatively,
wherein, in the connecting (S2904) each of the plurality of inner hub preform portions (310) together to form the inner hub hoop preform (304), for respective ones of the plurality of inner hub preform portions (310), the plurality of first end bifurcated layers (374) are connected in an overlapping manner with the plurality of second end bifurcated layers (376) of the adjacently connected inner hub preform portion (310), and the plurality of second end bifurcated layers (376) are connected in an overlapping manner with the plurality of first end bifurcated layers (374) of the another adjacently connected inner hub preform portion (310).

6. The method according to any preceding claim, further comprising adding (S2908) at least one additional preform layer (412, 414) to at least one of the outer shell hoop preform (302) to increase a thickness of the outer shell hoop preform (302), or to the inner hub hoop preform (304) to increase a thickness of the inner hub hoop preform (304), and alternatively,
wherein the at least one additional preform layer (412, 414) is added to at least one of an exterior side (416) of the outer shell hoop preform (302), or to an interior side (418) of the inner hub hoop preform (304).

7. The method according to claim 2, wherein the first outer shell frame connection end (320) comprises a first end outer shell scarf joint connecting portion (334, 346), and the second outer shell frame connection end (322) comprises a second end outer shell scarf joint connecting portion (336, 348), and alternatively,
wherein, in the connecting (S2903) each of the plurality of outer shell preform portions (308) together to form the outer shell hoop preform (302), for respective ones of the plurality of outer shell preform portions (308), the first end outer shell scarf joint connecting portion (334, 346) is connected with the second end outer shell scarf joint connecting portion (336, 348) of the adjacently connected outer shell preform portion (308), and the second end outer shell scarf joint connecting portion (336, 348) is connected with the first end outer shell scarf joint connecting portion (334, 346) of the another adjacently connected outer shell preform portion (308).

8. The method according to any preceding claim, further comprising adding (S2908) at least one additional preform layer (329, 379) to at least one of the plurality of outer shell frame preform connections (328), or to at least one of the plurality of inner hub frame preform connections (378), and alternatively,
wherein the at least one additional preform layer (329, 379) is an axial wrap around the at least one of the plurality of outer shell frame preform connections (328), or an axial wrap around the least one of the inner hub frame preform connections (378).

9. The method according to any preceding claim, wherein each of the plurality of outer shell preform portions (308') includes a first bifurcated outer shell strut portion (438), a second bifurcated outer shell strut portion (440), a third bifurcated outer shell strut portion (442), and a fourth bifurcated outer shell strut portion (444), and each of the plurality of inner hub preform portions (310') includes a first bifurcated inner hub strut portion (446), a second bifurcated inner hub strut portion (448), a third bifurcated inner hub strut portion (450), and a fourth bifurcated inner hub strut portion (452).

10. The method according to claim 9, wherein, in the arranging (S2906, S2907), the first bifurcated outer shell strut portion (438), the first bifurcated inner hub strut portion (446), the second bifurcated outer shell strut portion (440), and the second bifurcated inner hub strut portion (448) are arranged adjacent to one another to define a first strut preform portion (306a), and the third bifurcated outer shell strut portion (442), the third bifurcated inner hub strut portion (450), the fourth bifurcated outer shell strut portion (444), and the fourth bifurcated inner hub strut portion (452) are arranged adjacent to one another to define a second strut preform portion (306b).

11. The method according to claim 10, wherein the first strut preform portion (306a) defines a first side wall (392') of a strut preform portion (306) and the second strut preform portion (306b) defines a second side wall (394') of the strut preform portion (306).

12. The method according to any preceding claim, wherein each of the plurality of outer shell preform portions (308) includes a first bifurcated outer shell strut portion (384) and a second bifurcated outer shell strut portion (386), and each of the plurality of inner hub preform portions (310) includes a first bifurcated inner hub strut portion (388) and a second bifurcated inner hub strut portion (390).

13. The method according to claim 12, wherein, in the arranging (S2906, S2907), the first bifurcated outer shell strut portion (384) and the first bifurcated inner hub strut portion (388) are arranged adjacent to one another to define a first strut preform portion (306a), and the second bifurcated outer shell strut portion (386) and the second bifurcated inner hub strut portion (390) are arranged adjacent to one another to define a second strut preform portion (306b).

14. The method according to claim 13, wherein the first strut preform portion (306a) forms a first side wall (392) of a strut preform portion (306) and the second strut preform portion (306b) forms a second side wall (394) of the strut preform portion (306).

15. The method according to claim 14, further comprising inserting a filler material (398) between the first strut preform portion (306a) and the second strut preform portion (306b) to define a spar (400) of the strut preform portion (306).
